(19) Europäisches Patentamt / European Patent Office / Office européen des brevets

(11) **EP 3 430 779 B1**

(12) **FASCICULE DE BREVET EUROPEEN**

(45) Date de publication et mention de la délivrance du brevet:
**29.09.2021 Bulletin 2021/39**

(21) Numéro de dépôt: **17710563.2**

(22) Date de dépôt: **16.03.2017**

(51) Int Cl.:
*H04L 27/26* (2006.01)

(86) Numéro de dépôt international:
**PCT/EP2017/056326**

(87) Numéro de publication internationale:
**WO 2017/158133 (21.09.2017 Gazette 2017/38)**

(54) **PROCÉDÉ ET DISPOSITIF DE GÉNÉRATION D'UN SIGNAL MULTIPORTEUSE DE TYPE OFDM, PROCÉDÉ ET DISPOSITIF D'ATTÉNUATION D'EXTREMA D'UN TEL SIGNAL, PRODUITS PROGRAMME D'ORDINATEUR CORRESPONDANTS**

VERFAHREN UND VORRICHTUNG ZUR ERZEUGUNG EINES MEHRTRÄGER-OFDM-SIGNALS, VERFAHREN UND VORRICHTUNG ZUR DÄMPFUNG VON EXTREMA SOLCH EINES SIGNALS, ENTSPRECHENDE COMPUTERPROGRAMMPRODUKTE

METHOD AND DEVICE FOR GENERATING A MULTICARRIER OFDM SIGNAL, METHOD AND DEVICE FOR ATTENUATING EXTREMA OF SUCH A SIGNAL, CORRESPONDING COMPUTER-PROGRAM PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2016 FR 1652292**

(43) Date de publication de la demande:
**23.01.2019 Bulletin 2019/04**

(73) Titulaire: **ORANGE**
**92130 Issy-les-Moulineaux (FR)**

(72) Inventeur: **LANOISELEE, Marc**
**35520 La Chapelle Des Fougeretz (FR)**

(74) Mandataire: **Vidon Brevets & Stratégie**
**16B, rue de Jouanet**
**BP 90333**
**35703 Rennes Cedex 7 (FR)**

(56) Documents cités:
- **SEOG GEUN KANG ET AL: "A Novel Subblock Partition Scheme for Partial Transmit Sequence OFDM", IEEE TRANSACTIONS ON BROADCASTING, IEEE SERVICE CENTER, PISCATAWAY, NJ, US, vol. 45, no. 3, 1 septembre 1999 (1999-09-01), pages 333-338, XP011083079, ISSN: 0018-9316, DOI: 10.1109/11.796276**
- **LU G ET AL: "Enhanced interleaved partitioning PTS for peak-to-average power ratio reduction in OFDM systems", ELECTRONICS LETTERS, IEE STEVENAGE, GB, vol. 42, no. 17, 17 août 2006 (2006-08-17) , pages 983-984, XP006027164, ISSN: 0013-5194, DOI: 10.1049/EL:20060950**
- **D.-W. LIM ET AL: "A New PTS OFDM Scheme with Low Complexity for PAPR Reduction", IEEE TRANSACTIONS ON BROADCASTING., vol. 52, no. 1, 1 mars 2006 (2006-03-01), pages 77-82, XP055318196, US ISSN: 0018-9316, DOI: 10.1109/TBC.2005.861605**

EP 3 430 779 B1

**Description**

**1 DOMAINE TECHNIQUE**

Le domaine de l'invention est celui des communications radiofréquences pour lesquelles une modulation multiporteuse, notamment de type OFDM (pour « Orthogonal Frequency Division Multiplex » en anglais, ou « multiplexage par répartition en fréquences orthogonales » en français), est utilisée.

Plus précisément, l'invention concerne une méthode de génération d'un tel signal ainsi qu'une méthode d'atténuation des extrema d'un tel signal par correction des symboles de constellation.

Du fait de l'utilisation répandue de la modulation multiporteuse de type OFDM, l'invention a de nombreuses applications, notamment, mais non exclusivement, dans les domaines des réseaux locaux sans-fil (WiFi), de la radiotéléphonie mobile cellulaire 3GPP LTE (de l'anglais « 3rd Generation Partnership Project » et « Long Term Evolution »), ou encore de l'ADSL (de l'anglais « Asymmetric Digital Subscriber Line »), mais aussi dans le domaine de la diffusion de données, telle que décrite par exemple dans les standards relatifs à la diffusion audio numérique (DAB pour « Digital Audio Broadcasting » en anglais), la télédiffusion numérique, dont notamment DVB-T (de l'anglais « Digital Video Broadcasting - Terrestrial ») ou encore le nouveau standard DVB-T2.

**2 ARRIERE-PLAN TECHNOLOGIQUE**

Un inconvénient majeur de la technique OFDM est inhérent aux fortes fluctuations en amplitude du signal modulant obtenu.

En effet, dans le domaine temporel, la sommation des porteuses modulées de façon indépendante s'effectue de façon cohérente. Du fait du grand nombre de ces porteuses sommées ensemble, des extrema d'amplitude peuvent être rencontrés sur le signal modulant lorsque la sommation des porteuses modulées par les symboles de données devient constructive.

Ces extrema du signal modulant donnent lieu à des extrema correspondant sur le signal radiofréquence modulé. Dans ce cas, il n'est pas rare que la puissance instantanée du signal modulé surpasse de plus de 10 dB la puissance moyenne du signal à certains instants.

Ces fortes variations d'amplitude et de puissance sont problématiques à plusieurs égards :

- tout d'abord sur le signal modulant en bande de base, car elles nécessitent de surdimensionner le chemin de données pour permettre au signal de se propager sans écrêtage ;
- mais surtout sur le signal radiofréquences modulé, car elles nécessitent d'avoir les étages de puissance dimensionnés pour délivrer la puissance instantanée crête maximale alors que seule la puissance moyenne du signal est d'intérêt pour assurer un bilan de liaison. La surconsommation associée à ce dimensionnement particulier des étages d'émission est particulièrement problématique dans les systèmes utilisant ce type de modulation multiporteuse.

Différentes métriques sont classiquement utilisées pour quantifier ces fluctuations. A titre d'exemple, le facteur crête, ou CF (pour « Crest Factor » en anglais) est souvent utilisé pour les signaux modulants en bande de base. Il s'agit dans ce cas du ratio entre l'amplitude maximale du signal considéré ramenée à la valeur quadratique moyenne, ou RMS (pour « Root Mean Square » en anglais). Ce ratio peut lui-même être exprimé en valeur naturelle, ou en décibels. Pour les signaux radiofréquences modulés, le PAPR (pour « Peak to Average Power Ratio » en anglais) est souvent utilisé. Il s'agit alors du ratio entre la puissance instantanée du signal ramenée à sa puissance moyenne, soit, pour un signal modulé x(t) :

$$PAPR = \frac{max_t |x(t)|^2}{E. [|x(t)|^2]}$$

Là encore, ce ratio peut être exprimé en valeur naturelle, ou en décibels. Cette dernière métrique étant basée sur la notion de puissance du signal radiofréquences modulé, elle est souvent utilisée dans le domaine radiofréquence, car en lien direct avec la problématique de consommation des étages de puissance mentionnée ci-dessus. Dans tous les cas, il y a un lien direct entre les extrema du signal modulant en bande de base et les extrema du signal radiofréquence modulé.

Face à cette problématique de présence d'extrema de valeur importante dans ce type de modulation multiporteuse, différentes méthodes ont été proposées pour tenter de les minimiser.

Une première famille de méthodes est basée sur la mise en œuvre de « clipping », ou limitation, qui consiste à écrêter l'amplitude du signal lorsqu'il dépasse un seuil prédéfini. Cependant, cet écrêtage est par nature non linéaire et introduit une distorsion du signal émis se traduisant non seulement par un taux d'erreur binaire dégradé mais également par une remontée des lobes secondaires de la densité spectrale de puissance du signal après écrêtage.

Une seconde famille de méthodes est basée sur l'application d'une contrainte ou codage sur la séquence de données émise pour limiter les fluctuations du signal modulant. Cette méthode consiste à construire un jeu de mots de code qui minimise les extrema de ce signal. Plusieurs techniques de construction de ces codes ont été proposées. L'avantage de cette solution réside dans le fait qu'elle n'introduit pas de distorsion. En revanche, l'efficacité spectrale est pénalisée sans même pour autant apporter un gain de codage. De plus, à ce jour, son champ d'application est limité aux modulateurs OFDM à faible nombre de porteuses du fait d'une trop grande complexité de calcul.

Face à ces problématiques, une troisième famille de méthodes a été proposée, qui est basée sur la correction des symboles de constellation modulant les porteuses. L'idée sous-jacente à toutes les méthodes de cette troisième famille est de jouer sur la valeur des symboles de modulation pour éliminer les sommations constructives lors de la sommation cohérente de toutes les porteuses ainsi modulées. Plusieurs méthodes connues sont basées sur ce principe, par exemple :

- La méthode « TI-CES » (pour « Tone Injection - Constellation Extension Scheme » en anglais), comme décrite par exemple dans l'article de S. H. Han, J. M. Cioffi, "Tone Injection with Hexagonal Constellation for Peak-to-Average Power Ratio Reduction in OFDM ", IEEE Communications Letters, Vol 10, n°9, September 2006*, qui propose d'augmenter le nombre de points des constellations qui modulent les porteuses OFDM afin que pour un point de la constellation d'origine, il puisse correspondre plusieurs possibilités de coordonnées dans la nouvelle constellation. Selon cette approche, ce degré de liberté supplémentaire est utilisé pour générer un signal de plus faible PAPR. Cependant, la sélection de la meilleure possibilité de coordonnées pour chaque point requiert un accroissement de la complexité du calcul mis en œuvre, le rendant inadapté à une implémentation matérielle pour le traitement de signaux en temps réel.
- La méthode « ACE » (pour « Active Constellation Extension » en anglais), décrite par exemple dans l'article de B. S. Krongold, D. L. Jones, "PAR Reduction in OFDM via active Constellation Extension", IEEE Trans. On Broadcasting, Vol. 49, n°3, September 2003*, est également basée sur une modification de constellation et repose sur un déplacement effectué dans le sens d'un éloignement des axes de décision. Cependant, de la même manière que pour la méthode précédente, cette technique se caractérise par une complexité de calcul très élevée.
- La méthode « CD » (pour « Constellation Distortion » en anglais), comme décrite par exemple dans l'article de A. Aggarwal, E. R. Stauffer, T. H. Meng, "Computing the Optimal Amount of Constellation Distortion in OFDM Systems ", ICC 2007 Proceedings*, est également basée sur une modification de constellation et repose sur l'hypothèse selon laquelle le niveau de sortie de l'amplification d'émission est limité par les pics de puissance instantanée et que si l'amplitude de ces pics peut être diminuée, alors la puissance émise peut être augmentée. Selon cette technique, pour un taux de distorsion donné, un problème d'optimisation, dit convexe est résolu afin d'élaborer un signal OFDM avec un niveau de PAPR global minimal. Cependant, la complexité de calcul mise en œuvre augmente de manière exponentielle lorsque l'ordre de constellation devient élevé.
- La méthode « TR » (pour « Tone Réservation » en anglais), comme décrite par exemple dans l'article de M. Mroué, A. Nafkha, J. Palicot, B. Gavalda, N. Dagorne "Performance and implementation Evaluation of TR PAPR Reduction Methods for DVB-T2", International Journal of Digital Multimedia Broadcasting 2010*, qui propose de réserver certaines porteuses du multiplex OFDM, qui ne transportent pas d'informations mais des symboles optimisés à l'émission pour réduire le PAPR. L'optimisation de ces symboles peut être effectuée en utilisant par exemple un algorithme d'optimisation convexe de type SOCP (pour « Second Order Cone Programming » en anglais). Cependant, la puissance de calcul nécessaire à la mise en œuvre de cette méthode reste élevée.
- PCTS (pour « Pre-Constructed Temporal Signal » en anglais), décrite dans la demande de brevet français FR 3 003 107*, qui propose de calculer les corrections de symboles sur la base d'une corrélation complexe entre les échantillons en cosinus et sinus de la porteuse à un ordre donné et les échantillons réels et imaginaires des valeurs crêtes détectées sur la somme des porteuses corrigées d'ordre inférieur ou égal à cette ordre donné. Par ailleurs, les déplacements de symboles autorisés pour la correction peuvent être contraints et correspondre, par exemple, aux déplacements autorisés dans la méthode ACE. Cependant, là aussi la complexité de calcul reste élevée lorsque le nombre de porteuses augmente. SEOG GEUN KANG ET AL: "A Novel Subblock Partition Scheme for Partial Transmit Sequence OFDM",IEEE TRANSACTIONS ON BROADCASTING, IEEE SERVICE CENTER, PISCATAWAY, NJ, US, vol. 45, no. 3, 1 septembre 1999 (1999-09-01), pages 333-338, ISSN: 0018-9316, DOI: 10.1109/11.796276, divulgue un procédé de génération d'un signal multiporteuse de type OFDM comprenant des blocs OFDM constitués de M porteuses modulées par des symboles de constellation, dits symboles source, un bloc de M symboles source correspondant à un bloc OFDM de M porteuses, comprenant, d'une part une étape d'entrelacement des M symboles d'un bloc de symboles source en R sous-blocs et d'autre part une étape d'obtention d'un bloc de M échantillons temporels par transformée de Fourier discrète dudit bloc de M symboles source.

Il apparaît alors que ces méthodes de réduction des extrema basées sur la correction des symboles de constellation modulant les porteuses restent trop complexes en termes de charge de calcul lorsque le nombre de porteuses devient important, comme c'est le cas dans les standards de diffusion modernes.

Il existe ainsi un besoin pour une méthode de réduction des extrema d'un signal multiporteuse du type OFDM par correction des symboles de constellation qui présente une complexité de mise en œuvre réduite.

## 3 RESUME

Dans un mode de réalisation de l'invention, il est proposé un procédé de génération d'un signal multiporteuse de type OFDM comprenant des blocs OFDM constitués de M porteuses modulées par des symboles de constellation, dits symboles source, un bloc de M symboles source correspondant à un bloc OFDM de M porteuses. Un tel procédé comprend, d'une part :

- Une étape d'entrelacement des M symboles d'un bloc de symboles source en R sous-blocs de N symboles entrelacés, où R, M et N sont des entiers naturels tels que M=RxN ;

Et d'autre part des étapes de :

- obtention d'un bloc de M échantillons temporels par transformée de Fourier discrète du bloc de M symboles source ;
- détermination de N amplitudes maximales parmi les échantillons du bloc de M échantillons temporels et formation d'un vecteur contenant les N amplitudes maximales, dit vecteur crête.

Un tel procédé comprend également des étapes de :

- atténuation, par correction de symboles de constellation, des extrema d'un sous-bloc de N échantillons temporels correspondant à la transformée de Fourier discrète d'un des R sous-blocs de N symboles entrelacés, la correction prenant en compte au moins le vecteur crête et délivrant un sous-bloc de N symboles entrelacés corrigés, l'étape d'atténuation, répétée pour chaque sous-bloc parmi lesdits R sous-blocs de N symboles entrelacés, délivrant R sous-blocs de N symboles entrelacés corrigés;
- désentrelacement des R sous-blocs de N symboles entrelacés corrigés délivrant un bloc de M symboles source corrigés ; et
- génération d'un bloc OFDM du signal multiporteuse par transformée de Fourier discrète du bloc de M symboles source corrigés.

Ainsi, l'invention propose une solution nouvelle et inventive pour permettre la génération d'un bloc OFDM constitué d'un ensemble de M porteuses modulées par des symboles de constellation source, ce bloc présentant des valeurs d'amplitude crête atténuées par rapport au même bloc généré de manière classique via l'application directe d'une transformée de Fourier au bloc de M symboles de constellation source correspondant.

Pour ce faire, la méthode revendiquée propose d'appliquer une méthode d'atténuation de tels extrema par déplacement des symboles de constellation, non pas à l'ensemble du bloc de M symboles source, comme pratiqué classiquement, mais à un ensemble de R sous-blocs de N symboles entrelacés obtenus à partir du bloc de symboles source. Le nombre N de symboles de chacun de ces R sous-blocs étant inférieur au nombre M de symboles du bloc de symboles source, le procédé revendiqué conduit à une réduction de la complexité de mise en œuvre des méthodes connues d'atténuation des extrema utilisées, permettant ainsi d'envisager des implémentations matérielles réalistes lorsque le nombre de porteuses augmente ainsi qu'une minimisation de la consommation en énergie du système.

Selon un mode de réalisation, lors de l'étape d'entrelacement des M symboles d'un bloc de symboles source en R sous-blocs de N symboles entrelacés, un i-ième sous-bloc de N symboles entrelacés, i étant un entier allant de 1 à R, comprend des symboles d'indice $(i-1)+k*R$ du bloc de symboles source, k étant un entier allant de 0 à N-1.

Cet entrelacement permet d'obtenir une relation simple et directe entre les indices des échantillons obtenus par l'application d'une transformée de Fourier discrète sur le bloc de M symboles source et les indices des échantillons correspondants obtenus par transformée de Fourier discrète des sous-blocs de N symboles entrelacés ainsi déterminés.

Selon une caractéristique, un élément d'indice j du vecteur crête, j étant un entier allant de 0 à N-1, est égal à l'amplitude maximale des échantillons d'indice $j+r*N$ du bloc de M échantillons temporels, avec r un entier allant de 0 à R-1.

Ainsi, le procédé revendiqué permet de déterminer un vecteur crête servant de vecteur de contrainte pour la mise en œuvre de la méthode d'atténuation des extrema appliquée à chacun des R sous-blocs de symboles entrelacés. Ce vecteur crête est déterminé sur la seule base des extrema présents dans le bloc OFDM correspondant au bloc de M symboles source, et est par ailleurs commun à tous les sous-blocs de N symboles entrelacés correspondant à ce bloc de symboles source, conduisant par là-même à une implémentation simple et efficace du procédé revendiqué.

Dans un mode de réalisation de l'invention, l'étape d'atténuation des extrema par correction de symboles de constellation est effectuée successivement pour chacun des R sous-blocs de N symboles entrelacés. Par ailleurs :

- l'étape d'atténuation effectuée pour les sous-blocs 1 à v-1 de N symboles entrelacés, où v est un entier compris entre 2 et R, délivre v-1 sous-blocs de N symboles entrelacés corrigés ;
- lorsque l'étape d'atténuation est effectuée pour un v-ième sous-bloc de N symboles entrelacés, le vecteur crête pris en compte par la correction est mis à jour en fonction d'une amplitude d'au moins un échantillon temporel parmi v-1 sous-blocs de N échantillons temporels entrelacés corrigés correspondant à la transformée de Fourier discrète des v-1 sous-blocs de N symboles entrelacés corrigés préalablement obtenus.

Ainsi, dans ce mode de réalisation, le vecteur crête peut être mis à jour après chaque application de la méthode d'atténuation des extrema à un des sous-blocs de symboles entrelacés en vue de l'application de cette méthode d'atténuation au sous-bloc de symboles entrelacés suivant. En effet, la correction des symboles entrelacés obtenue par l'application successive de la méthode d'atténuation des extrema à chaque sous-bloc de symboles entrelacés peut conduire, outre la minimisation des extrema présents dans le vecteur crête d'origine, à la génération de nouveaux extrema, non présents dans le vecteur crête d'origine et donc non pris en compte par défaut lors de l'application de la méthode d'atténuation des extrema à chaque sous-bloc de symboles entrelacés. La mise à jour du vecteur crête après chaque application de la méthode d'atténuation des extrema en vue de l'application de la méthode d'atténuation au sous-bloc de symboles entrelacés suivant permet alors de prendre en compte cette génération potentielle de ces nouveaux extrema et leur correction, le cas échéant, via l'application de la méthode d'atténuation des extrema aux sous-blocs de symboles entrelacés restant à traiter sur la base du vecteur crête mis à jour.

Plus particulièrement, lorsque l'étape d'atténuation est effectuée pour le v-ième sous-bloc de N symboles entrelacés, la mise à jour du vecteur crête pris en compte par la correction correspond, pour un élément d'indice s dudit vecteur crête, s étant un entier compris entre 0 et N-1, à :

- une incrémentation de l'élément d'indice s d'une valeur correspondant à une différence, pondérée d'un premier facteur correctif Gup, entre une amplitude d'un échantillon d'indice s d'un sous-bloc de N échantillons temporels entrelacés corrigés correspondant à la transformée de Fourier discrète du sous-bloc de rang v-1 de N symboles entrelacés corrigés préalablement obtenu, et une amplitude d'un échantillon d'indice s d'un sous-bloc de N échantillons temporels entrelacés correspondant à la transformée de Fourier discrète du sous-bloc de rang v-1 de N symboles entrelacés lorsque la différence est positive ou nulle ;
- une décrémentation de l'élément d'indice s d'une valeur correspondant à cette différence, pondérée d'un second facteur correctif Gdown, lorsque la différence est négative.

Ainsi, la mise à jour du vecteur crête après l'application de la méthode d'atténuation des extrema à un des sous-blocs de symboles entrelacés peut se faire via une pondération de l'accroissement, ou de la réduction de l'amplitude des échantillons temporels correspondant à la modulation des porteuses par les symboles entrelacés corrigés obtenus par rapport à leur valeur d'origine correspondant à la modulation des porteuses par les symboles source. Cette pondération permet alors de prendre en compte la génération d'un extremum, ou la réduction de l'amplitude du signal, liés à l'application de la méthode d'atténuation des extrema à un des sous-blocs de symboles entrelacés de manière souple et adaptative, améliorant par là-même la performance du système.

Dans un mode de réalisation, le premier facteur correctif Gup vaut 1 et le second facteur correctif Gdown vaut 0,707.

Ainsi, lorsque l'application de la méthode d'atténuation des extrema à un des sous-blocs de symboles entrelacés conduit à un accroissement de l'amplitude d'un des échantillons temporels correspondant, cet accroissement est pris en compte dans le vecteur crête avec une pondération préférentiellement de 1 de manière à considérer un pire cas de contribution de cet échantillon à un extremum du signal final (cet accroissement pouvant potentiellement se sommer de façon constructive avec les échantillons de même ordre issus de la modulation des porteuses par les symboles entrelacés corrigés des autres sous-blocs de symboles entrelacés). De même lorsque l'application de la méthode d'atténuation des extrema à un des sous-blocs de symboles entrelacés conduit à une réduction de l'amplitude d'un des échantillons temporels correspondant, cette réduction est prise en compte dans le vecteur crête avec une pondération préférentiellement de 0,707, correspondant à une sommation quadratique avec les autres échantillons de même ordre, de manière à ne pas surestimer l'impact sur le signal final de la réduction obtenue.

Dans un autre mode de réalisation de l'invention, à l'issue de l'étape d'obtention d'un bloc de M échantillons temporels par transformée de Fourier discrète du bloc de M symboles source, le procédé de génération met en œuvre une étape de suréchantillonnage du bloc de M échantillons temporels obtenu.

Ainsi, les traitements dans le domaine temporel, c'est-à-dire après application de ladite transformée de Fourier discrète, sont effectués sur un signal numérique suréchantillonné, de préférence d'un facteur 2, par rapport à la fréquence d'échantillonnage naturelle de ladite transformée de Fourier discrète. Les extrema du signal multiporteuse de type OFDM se trouvent alors être correctement représentés dans le domaine temporel, permettant par là-même leur traitement correct par la technique décrite.

Dans différents modes de réalisation, l'atténuation des extrema par correction des symboles de constellation met en œuvre une correction appartenant au groupe comprenant :

- une correction ACE (pour « Active Constellation Extension » en anglais) ;
- une correction TI-CES (pour « Tone Injection - Constellation Extension Scheme » en anglais) ;
- une correction CD (pour « Constellation Distortion » en anglais) ;
- une correction TR (pour « Tone Réservation » en anglais) ; et
- une correction PCTS (pour « Pre-Constructed Temporal Signal » en anglais).

Ainsi, le procédé revendiqué peut s'appliquer indifféremment à tout type de méthode de réduction des extrema d'un signal multiporteuse de type OFDM par déplacement de symboles de constellation afin d'en réduire la complexité de mise en œuvre, en particulier lorsque le nombre de porteuses augmente.

Dans un autre mode de réalisation, le procédé de génération comprend en outre une étape préliminaire de pré-correction du bloc de M symboles source, un symbole source étant pré-corrigé d'une valeur de correction intermédiaire prédéfinie entre une valeur de correction nulle et une valeur de correction extrême.

Ainsi, dans cette variante, la technique décrite est appliquée non pas directement à un bloc de symboles source, mais à un bloc de symboles source pré-corrigés, ou pré-accentués, cette pré-correction, ou pré-accentuation, correspondant à une correction possible par la méthode de réduction d'extrema par correction de symboles mise en œuvre lors de l'étape de réduction des extrema des sous-blocs de N symboles entrelacés. En effet, cette pré-correction, ou pré-accentuation, pouvant être effectuée de manière statique, i.e. sans prendre en compte les extrema effectifs du signal temporel correspondant, de manière à garder une complexité raisonnable, elle permet d'initier le procédé revendiqué à un état intermédiaire entre les symboles sources d'origine et une position de correction extrême et ainsi d'améliorer les performances du procédé revendiqué ainsi que sa rapidité de convergence.

Dans un autre mode de réalisation de l'invention, il est proposé un procédé d'atténuation d'extrema d'un signal multiporteuse de type OFDM comprenant une étape d'atténuation, par correction de symboles de constellation, des extrema d'un bloc de N échantillons temporels correspondant à une transformée de Fourier discrète d'un bloc de N symboles de constellation, la correction prenant en compte un vecteur crête représentatif des extrema du signal multiporteuse et délivrant un bloc de N symboles corrigés. Un tel signal multiporteuse de type OFDM comprend des blocs OFDM constitués de M porteuses modulées par des symboles de constellation, dits symboles source, un bloc de M symboles source correspondant à un bloc OFDM de M porteuses. En outre :

- le bloc de N symboles de constellation est un sous-bloc parmi R sous-blocs de N symboles entrelacés obtenus par entrelacement de M symboles d'un bloc de symboles source, où R, M et N sont des entiers naturels tels que M=RxN ;
- le vecteur crête est obtenu par détermination de N amplitudes maximales parmi des échantillons temporels obtenus par transformée de Fourier discrète du bloc de M symboles source.

Un tel procédé d'atténuation comprend en outre une étape de désentrelacement de R sous-blocs de N symboles entrelacés corrigés, obtenus par répétition de l'étape d'atténuation, pour chaque bloc de N symboles de constellation parmi les R sous-blocs de N symboles entrelacés.

Ainsi, l'invention concerne également un procédé d'atténuation des extrema d'un bloc OFDM constitué d'un ensemble de M porteuses modulées par des symboles de constellation source via l'application d'une méthode d'atténuation de tels extrema par déplacement des symboles de constellation, non pas à l'ensemble du bloc de M symboles source mais à un ensemble de R sous-blocs de N symboles entrelacés obtenus à partir du bloc de symboles source. Le nombre N de symboles de chacun de ces R sous-blocs étant inférieur au nombre M de symboles du bloc de symboles source, le procédé revendiqué conduit ainsi à une réduction de la complexité de mise en œuvre des méthodes connues d'atténuation des extrema utilisées.

L'invention concerne également un programme d'ordinateur, comprenant des instructions de code de programme pour la mise en œuvre d'un procédé de génération d'un signal multiporteuse de type OFDM tel que décrit précédemment, selon l'un quelconque de ses différents modes de réalisation, lorsque ledit programme est exécuté par un processeur.

Elle concerne encore un programme d'ordinateur, comprenant des instructions de code de programme pour la mise en œuvre d'un procédé de réduction des extrema d'un bloc OFDM tel que décrit précédemment, selon l'un quelconque de ses différents modes de réalisation, lorsqu'il est exécuté par un processeur.

Dans un autre mode de réalisation de l'invention, il est proposé un dispositif de génération d'un signal multiporteuse de type OFDM comprenant des blocs OFDM constitués de M porteuses modulées par des symboles de constellation, dits symboles source, un bloc de M symboles source correspondant à un bloc OFDM de M porteuses. Un tel dispositif de génération comprenant, d'une part :

- un entrelaceur de M symboles d'un bloc de symboles source en R sous-blocs de N symboles entrelacés, où R, M et N sont des entiers naturels tels que M=RxN ;

Et d'autre part :

- un premier générateur d'un bloc de M échantillons temporels par transformée de Fourier discrète du bloc de M symboles source ;
- un calculateur de N amplitudes maximales parmi les échantillons du bloc de M échantillons temporels et un second générateur d'un vecteur contenant les N amplitudes maximales, dit vecteur crête.

Un tel dispositif de génération comprend également :

- un atténuateur, par correction de symboles de constellation, d'extrema d'un sous-bloc de N échantillons temporels correspondant à la transformée de Fourier discrète d'un sous-bloc de N symboles entrelacés, la correction prenant en compte au moins le vecteur crête et délivrant un bloc de N symboles entrelacés corrigés,
- un désentrelaceur de R sous-blocs de N symboles entrelacés corrigés délivrant un bloc de M symboles source corrigés ; et
- un troisième générateur d'un bloc OFDM du signal multiporteuse par transformée de Fourier discrète du bloc de M symboles source corrigés.

Un tel dispositif de génération est notamment apte à mettre en œuvre le procédé de génération d'un signal multiporteuse de type OFDM selon l'invention (selon l'un quelconque des différents modes de réalisation précités).

Dans un autre mode de réalisation de l'invention, il est proposé un dispositif d'atténuation d'extrema d'un signal multiporteuse de type OFDM comprenant un atténuateur, par correction de symboles de constellation, des extrema d'un bloc de N échantillons temporels correspondant à une transformée de Fourier discrète d'un bloc de N symboles de constellation, la correction prenant en compte un vecteur crête représentatif des extrema dudit signal multiporteuse et délivrant un bloc de N symboles corrigés.

Le signal multiporteuse de type OFDM comprenant des blocs OFDM constitués de M porteuses modulées par des symboles de constellation, dits symboles source, un bloc de M symboles source correspondant à un bloc OFDM de M porteuses, un tel dispositif d'atténuation d'extrema comprend :

- un entrelaceur de M symboles d'un bloc de symboles source en R sous-blocs de N symboles entrelacés, où R, M et N sont des entiers naturels tels que M=RxN, le bloc de N symboles de constellation étant un sous-bloc parmi les R sous-blocs de N symboles entrelacés ;
- un calculateur de N amplitudes maximales parmi des échantillons temporels obtenus par transformée de Fourier discrète du bloc de M symboles source et un générateur d'un vecteur contenant les N amplitudes maximales, dit vecteur crête.

Un tel dispositif d'atténuation d'extrema comprend également :

- un désentrelaceur de R sous-blocs de N symboles entrelacés corrigés délivrant un bloc de M symboles source corrigés.

Ainsi, selon encore un autre aspect, l'invention concerne également un dispositif d'atténuation d'extrema, qui est notamment apte à mettre en œuvre le procédé de réduction des extrema d'un bloc OFDM selon l'invention (selon l'un quelconque des différents modes de réalisation précités).

## 4 LISTE DES FIGURES

D'autres caractéristiques et avantages de l'invention apparaîtront à la lecture de la description suivante, donnée à titre d'exemple indicatif et des dessins annexés, dans lesquels :

- la figure 1 illustre les étapes de procédés de génération et d'atténuation des extrema d'un signal multiporteuse de type OFDM selon différents modes de réalisation de l'invention ;
- la figure 2 illustre l'entrelacement des porteuses et des symboles modulant correspondants selon un mode de réalisation de l'invention ;

- la figure 3 illustre un dispositif de génération et d'atténuation des extrema d'un signal multiporteuse de type OFDM selon différents modes de réalisation de l'invention ;
- la figure 4 illustre un dispositif d'atténuation des extrema d'un signal multiporteuse de type OFDM selon un mode de réalisation particulier de l'invention ;
- les figures 5a et 5b illustrent des variantes d'implémentation des procédés de génération et d'atténuation des extrema selon différents modes de réalisation de l'invention ;
- la figure 6 illustre un dispositif d'atténuation des extrema d'un signal multiporteuse de type OFDM selon un autre mode de réalisation particulier de l'invention ;
- les figures 7a et 7b illustrent les gains obtenus en nombre de portes logiques et en taille mémoire nécessaire à l'implémentation d'une méthode de réduction d'extrema du type PCTS en utilisant la technique décrite ; et
- les figures 8a, 8b et 8c présentent des exemples de structures de dispositif de génération d'un signal multiporteuse de type OFDM ainsi que d'atténuation des extrema d'un signal multiporteuse de type OFDM selon un mode de réalisation particulier de l'invention.

## 5 DESCRIPTION DETAILLEE DE L'INVENTION

Sur toutes les figures du présent document, les éléments et étapes identiques sont désignés par une même référence.

Le principe général de la technique décrite consiste à obtenir R sous-blocs de N symboles par entrelacement d'un bloc de M symboles source destinés à moduler les M porteuses d'un bloc OFDM, M étant égal à RxN. Un vecteur crête obtenu sur la base de N amplitudes maximales parmi les M échantillons temporels correspondant à la transformée de Fourier discrète du bloc de M symboles source est par ailleurs obtenu. De la sorte, une méthode d'atténuation des extrema peut être mise en œuvre avec une complexité raisonnable pour chacun des R sous-blocs de N symboles entrelacés en tenant compte du vecteur crête. Le désentrelacement des R sous-blocs de N symboles entrelacés corrigés ainsi obtenus permet alors d'obtenir un bloc de M symboles source corrigé correspondant à un bloc OFDM présentant des extrema réduits par rapport à la forme d'onde d'origine correspondant au bloc de M symboles source.

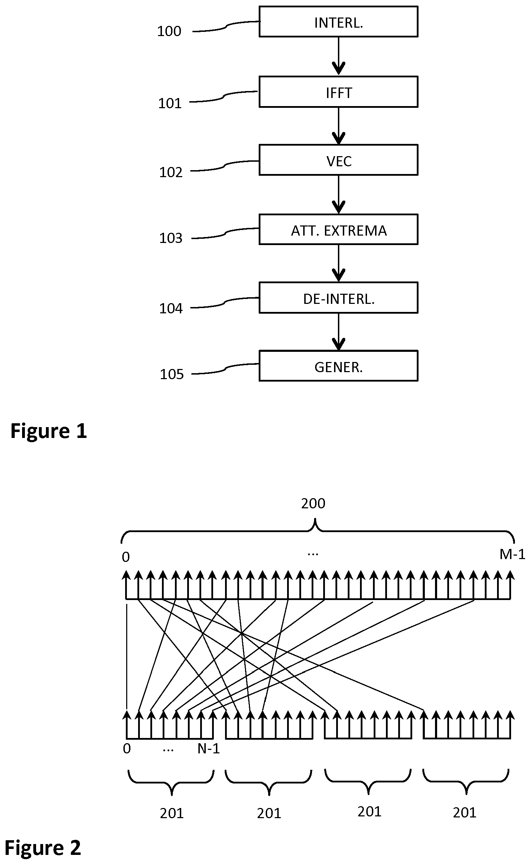

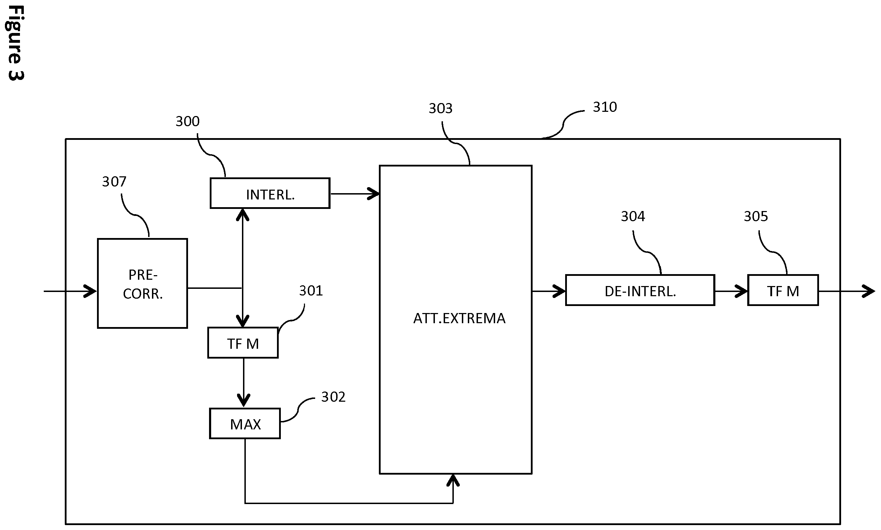

On décrit maintenant, en relation avec les **figures 1, 2 et 3**, une technique de génération d'un signal multiporteuse de type OFDM comprenant des blocs OFDM constitués de M porteuses modulées par des symboles de constellation selon différents modes de réalisation de l'invention. Une telle technique de génération d'un signal OFDM, implémentée dans un dispositif de génération d'un signal multiporteuse de type OFDM 310, met en œuvre une atténuation des extrema de ce signal.

Lors d'une étape *INTERL.* 100, un bloc de M symboles de constellation, dits symboles source, destinés à moduler les M porteuses du bloc OFDM correspondant est entrelacé par un entrelaceur 300 de manière à obtenir R sous-blocs de N symboles entrelacés tel que M=RxN, avec R, M et N des entiers naturels.

Pour ce faire, il est proposé dans un mode de réalisation d'observer l'expression du signal obtenu à l'instant $t = k_M.T_e$, avec $T_e$ la période d'échantillonnage, $k_M$ un entier tel que $0 \leq k_M < M$, et $M.T_e = T_M$ la période d'un symbole OFDM, en sortie de transformée de Fourier discrète inverse d'un bloc de M symboles source $X_m$, avec m un entier allant de 0 à M-1 :

$$x(k_M.Te) = \sum_{m=0}^{M-1} X_m . e^{2.j.\pi.\frac{m}{M}.k_M}$$

En choisissant N un sous-multiple entier de M, et en posant R=M/N, il apparaît que cette équation peut alors se réécrire comme :

$$x(k_M.Te) = \sum_{n=0}^{N-1} \left[ X_{R.n} . e^{2.j.\pi.\frac{R.n}{M}.k_M} + X_{R.n+1} . e^{2.j.\pi.\frac{R.n+1}{M}.k_M} + \cdots \right.$$
$$\left. + X_{R.n+R-1} . e^{2.j.\pi.\frac{R.n+R-1}{M}.k_M} \right]$$

Ou encore :

$$x(k_M.Te) = \sum_{n=0}^{N-1} e^{2.j.\pi.\frac{n}{N}.k_M} . \left[ X_{R.n.} + X_{R.n+1}.e^{2.j.\pi.\frac{1}{M}.k_M} + \cdots + X_{R.n+R-1}.e^{2.j.\pi.\frac{R-1}{M}.k_M} \right]$$

En posant $\varphi(y, k_M) = e^{2.j.\pi.\frac{y}{M}.k_M}$, et avec $(k_M \bmod N) = k_N$, $k_N$ étant un entier allant de 0 à N-1, on obtient alors l'équation (Eq1) :

$$x(k_M.Te) = \sum_{n=0}^{N-1} X_{R.n}.e^{2.j.\pi.\frac{n}{N}.k_N}$$

$$+ \varphi(1, k_M) . \sum_{n=0}^{N-1} X_{R.n+1}.e^{2.j.\pi.\frac{n}{N}.k_N}$$

$$+ \ldots \ldots \ldots \ldots \ldots \ldots \ldots \ldots$$

$$+ \varphi(R - 1, k_M). \sum_{n=0}^{N-1} X_{R.n+R-1}.e^{2.j.\pi.\frac{n}{N}.k_N}$$

Selon cette équation, le signal $x(k_M.Te)$ peut donc s'exprimer comme la somme de R signaux périodiques de période N, pondérés par un terme de phase $\varphi(y, k_M)$ ; ces R signaux étant issus d'autant d'opérations de transformée de Fourier discrète inverse de taille N réalisées sur des sous-blocs 201 de N symboles source obtenus par entrelacement des M symboles source du bloc d'origine 200.

Plus précisément, dans ce mode de réalisation le symbole d'indice k, k étant un entier allant de 0 à N-1, du i-ième sous-bloc 201 de N symboles entrelacés, i étant un entier allant de 1 à R, correspond au symbole d'indice (i-1)+k*R du bloc de M symboles source 200.

Dans une variante, l'entrelaceur *INTERL.* 300 est implémenté sous la forme d'un entrelaceur matriciel complexe à N lignes et M/N = R colonnes dont la latence est de M périodes d'horloge à la fréquence $F_e = 1/T_e$, le principe de l'entrelacement matriciel étant d'écrire en ligne les données dans une mémoire et de les relire en colonne.

L'entrelaceur *INTERL.* 300 délivre alors les R sous-blocs de N symboles entrelacés en vue de leur correction par un atténuateur *ATT. EXTREMA* 303.

Pour ce faire, lors d'une étape *IFFT* 101, un bloc de M échantillons temporels est obtenu par un premier générateur *TF M* 301 via la transformée de Fourier discrète inverse du bloc de M symboles source.

Dans une variante, M s'exprime comme une puissance de deux, permettant d'implémenter cette transformée de Fourier discrète comme une transformée de Fourier rapide.

Lors d'une étape *VEC.* 102, un vecteur crête contenant N valeurs d'amplitudes maximales est déterminé par un module de détermination de vecteur crête *MAX 302* sur la base du bloc de M échantillons temporels délivré par le premier générateur *TF M* 301. Plus particulièrement, le module de détermination de vecteur crête *MAX 302* comprend un calculateur de N valeurs d'amplitudes maximales parmi les M échantillons temporels délivrés par le premier générateur *TF M* 301 et un second générateur d'un vecteur contenant les N amplitudes maximales.

Dans le mode de réalisation correspondant à l'entrelacement des symboles décrit ci-dessus en relation avec l'équation (Eq1), il apparaît que l'amplitude des R échantillons d'indices $k_{M0}$, $k_{M1}$, ..., $k_{MR-1}$ tels que $(k_{Mr} \bmod N) = k_N$, r étant un entier allant de 0 à R-1, du bloc OFDM obtenu par transformée de Fourier discrète inverse du bloc de M symboles source sont tous fonction de l'amplitude des échantillons d'indice $k_N$ des sous-blocs obtenus par transformée de Fourier discrète inverse des R sous-blocs de N symboles entrelacés délivrés par l'entrelaceur *INTERL.* 300 lors de l'étape 100.

Ainsi, si un extremum existe pour un des R échantillons d'indices $k_{M0}$, $k_{M1}$, ..., $k_{MR-1}$ tels que $(k_{Mr} \bmod N) = k_N$ du bloc OFDM obtenu par transformée de Fourier discrète inverse du bloc de M symboles source, il est alors possible de le réduire en agissant sur la valeur des échantillons d'indice $k_N$ des R sous-blocs obtenus par transformée de Fourier discrète inverse des sous-blocs de N symboles entrelacés correspondant.

Dans ce mode de réalisation, l'élément d'indice $k_N$ du vecteur crête, $k_N$ étant un entier allant de 0 à N-1, est égal au maximum de l'amplitude des échantillons d'indice $k_N$+r*N du bloc de M échantillons temporels, avec r un entier allant de 0 à R-1.

Il apparaît alors que si l'élément d'indice $k_N$ du vecteur crête ainsi défini est supérieur à un seuil donné, i.e. si l'amplitude d'un des échantillons d'indices $k_{M0}$, $k_{M1}$, ..., $k_{MR-1}$ tels que $(k_{Mr} \bmod N) = k_N$ du bloc OFDM obtenu par transformée de Fourier discrète inverse du bloc de M symboles source est supérieure à ce seuil donné, alors cette information peut être utilisée pour déduire une contrainte de réduction de l'amplitude des échantillons d'indice $k_N$ des sous-blocs obtenus par transformée de Fourier discrète inverse des sous-blocs de N symboles entrelacés correspondant.

Par conséquent, le vecteur crête ainsi défini peut servir de vecteur de contrainte à une méthode de réduction d'extrema par correction de symboles appliquée à chacun des R sous-blocs de N symboles entrelacés délivrés par l'entrelaceur *INTERL.* 300 lors de l'étape 100.

Ainsi, lors d'une étape *ATT. EXTREMA* 103, l'atténuateur 303 se base sur le vecteur crête déterminé par le module de détermination de vecteur crête 302 lors de l'étape *VEC.* 102, pour appliquer une méthode de réduction d'extrema par correction de symboles à chaque sous-bloc de N symboles entrelacés délivré par l'entrelaceur *INTERL.* 300 lors de l'étape 100. Plus précisément, dans le mode de réalisation décrit ci-dessus en relation avec l'équation (Eq1), si une amplitude maximale d'indice $k_N$ dans le vecteur crête est supérieure à un seuil donné, la méthode de réduction d'extrema va tendre à réduire l'amplitude des échantillons de même indice des R sous-blocs obtenus par transformée de Fourier discrète inverse des sous-blocs de N symboles entrelacés délivrés par l'entrelaceur 300 lors de l'étape 100, et ce dans un rapport donné par rapport à ce seuil donné.

Dans des variantes, la méthode de réduction d'extrema par correction de symboles appliquée à chaque sous-blocs de N symboles entrelacés est une méthode connue, par exemple appartenant au groupe :

- une correction ACE (pour « Active Constellation Extension » en anglais) ;
- une correction TI-CES (pour « Tone Injection - Constellation Extension Scheme » en anglais) ;
- une correction CD (pour « Constellation Distortion » en anglais) ;
- une correction TR (pour « Tone Réservation » en anglais) ; et
- une correction PCTS (pour « Pre-Constructed Temporal Signal » en anglais).

L'application de la méthode de réduction d'extrema par correction de symboles aux R sous-blocs de N symboles entrelacés conduit ainsi à l'obtention de R sous-blocs de N symboles entrelacés corrigés délivrés par l'atténuateur *ATT. EXTREMA* 303 à un désentrelaceur *DE-INTERL.* 304.

Ainsi, l'atténuateur 303 traitant des sous-blocs de taille N, et N étant un sous-multiple entier de la taille M des blocs OFDM composant le signal multiporteuse considéré, la complexité de mise en œuvre de l'atténuateur 303 se trouve réduite par rapport à une implémentation comme rencontrée dans l'état de la technique qui traite les blocs de taille M dans leur ensemble.

Lors d'une étape *DE-INTERL.* 104, le désentrelaceur 304 effectue alors l'opération inverse de celle réalisée par l'entrelaceur 300 lors de l'étape *INTERL.* 100 dans le but de délivrer un bloc de M symboles source corrigés correspondant à un bloc OFDM présentant des extrema réduits par rapport au bloc OFDM correspondant au bloc de M symboles source.

Par exemple, dans le mode de réalisation décrit en relation avec l'équation (Eq1), il apparaît que l'opération inverse à celle d'entrelacement décrite en relation avec la figure 2 correspond à avoir :

- le symbole corrigé d'indice 0 du bloc de M symboles source corrigés qui correspond au symbole corrigé d'indice 0 du premier sous-bloc de N symboles corrigés ;
- le symbole corrigé d'indice 1 du bloc de M symboles source corrigés qui correspond au symbole corrigé d'indice 0 du second sous-bloc de N symboles corrigés ;
- ...
- le symbole corrigé d'indice R-1 du bloc de M symboles source corrigés qui correspond au symbole corrigé d'indice 0 du R-ième sous-bloc de N symboles corrigés ;
- le symbole corrigé d'indice R du bloc de M symboles source corrigés qui correspond au symbole corrigé d'indice 1 du premier sous-bloc de N symboles corrigés ;
- le symbole corrigé d'indice R+1 du bloc de M symboles source corrigés qui correspond au symbole corrigé d'indice 1 du second sous-bloc de N symboles corrigés ;
- ...
- le symbole corrigé d'indice 2*R-1 du bloc de M symboles source corrigés qui correspond au symbole corrigé d'indice 1 du R-ième sous-bloc de N symboles corrigés ;
- ...
- le symbole corrigé d'indice M-1 du bloc de M symboles source corrigés qui correspond au symbole corrigé d'indice N-1 du R-ième sous-bloc de N symboles corrigés ;

En d'autres termes, si l'on considère un bloc de M symboles corrigés, dit bloc concaténé, obtenu par la concaténation ordonnée du premier au R-ième des R sous-blocs de N symboles corrigés, le symbole source modifié d'indice m, m étant un entier allant de 0 à M-1, dans le bloc de M symboles source modifiés correspond au symbole corrigé d'indice $(m * N) \bmod M + \lfloor (m * N)/M \rfloor$, où $\lfloor . \rfloor$ désigne la partie entière, dans le bloc concaténé.

Le bloc de M symboles source modifiés est alors délivré à un troisième générateur *TF M* 305 qui, lors d'une étape *GENER.* 105 génère un bloc OFDM constitué de M porteuses modulées par les M symboles source modifiés via la mise en œuvre d'une transformée de Fourier discrète inverse de taille M du bloc de M symboles source modifiés. Le bloc OFDM ainsi généré à partir du bloc de M symboles source modifiés présente des extrema d'amplitude réduits par rapport au bloc OFDM généré à partir du bloc de M symboles source d'origine par le premier générateur *TF M* 301.

Dans une variante, la technique décrite est appliquée non pas directement à un bloc de M symboles source, mais à un bloc de M symboles source pré-corrigés. Ainsi, lors d'une étape préliminaire de pré-correction, un module de pré-correction *PRE-CORR.* 307 délivre un bloc de M symboles source pré-corrigés à un état intermédiaire entre les symboles sources d'origine et une position de correction extrême, cet état intermédiaire correspondant à une correction des symboles sources telle qu'autorisée par la méthode de réduction d'extrema par correction de symboles mise en œuvre dans l'atténuateur 303. Ainsi, la mise en œuvre par l'atténuateur 303 de la méthode de réduction d'extrema par correction de symboles considérée se trouve facilitée, ce qui permet de réduire son temps de convergence.

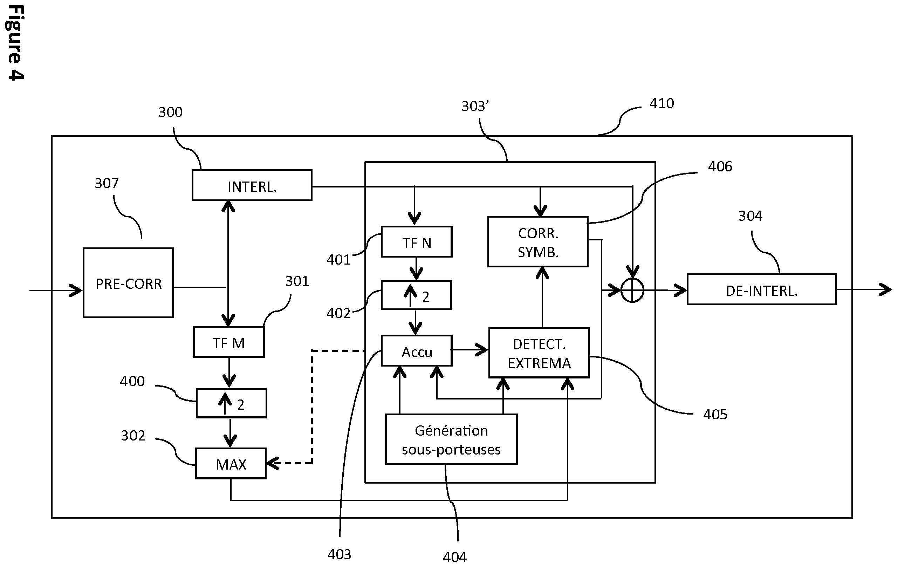

On décrit maintenant, en relation avec la **figure 4** un dispositif 410 d'atténuation des extrema d'un signal multiporteuse de type OFDM selon un mode de réalisation particulier de l'invention.

Dans ce mode de réalisation, la méthode de réduction d'extrema par correction de symboles appliquée à chaque sous-blocs de N symboles entrelacés est une méthode de correction PCTS correspondant à la méthode décrite extensivement dans la demande de brevet français publiée sous le numéro FR 3 003 107.

La méthode PCTS implémentée dans l'atténuateur 303' traite ici successivement les R sous-blocs de N symboles entrelacés délivrés par l'entrelaceur *INTERL.* 300 sur la base d'un bloc de M symboles source. Pour ce faire, l'atténuateur 303' prend également comme données d'entrée le vecteur crête délivré par le module de détermination de vecteur crête 302, qui, comme indiqué précédemment, comprend un calculateur de N amplitudes maximales parmi les M échantillons temporels délivrés par le premier générateur *TF M* 301 et un second générateur d'un vecteur contenant ces N amplitudes maximales.

Dans ce mode de réalisation, le bloc d'échantillons temporels délivré par le premier générateur *TF M* 301 est suréchantillonné d'un facteur deux par un premier sur-échantillonneur 400. En effet, comme détaillé dans la demande de brevet français FR 3 003 107, le suréchantillonnage d'un signal OFDM à une fréquence d'échantillonnage supérieure à la fréquence d'échantillonnage naturelle de la transformée de Fourier discrète utilisée pour sa génération permet une meilleure représentation des extrema du signal analogique correspondant. La mise en œuvre d'une méthode de réduction des extrema sur la base d'un tel signal numérique suréchantillonné dans le domaine temporel permet ainsi une meilleure prise en compte des extrema et conduit donc à de meilleurs résultats. Dans ce cadre, plus le suréchantillonnage est important, plus la représentation temporelle des extrema est correcte et leur prise en compte pour leur réduction également. Cependant, plus ce suréchantillonnage est important, plus la complexité de mise en œuvre du traitement croît. En pratique, il apparaît qu'un suréchantillonnage d'un facteur deux permet déjà d'atteindre des résultats satisfaisants pour la plupart des applications.

Ainsi, considérant un u-ième bloc de M symboles source composé des symboles $Y_{(u.M)}$, $Y_{(u.M+1)}$, $\cdots$, $Y_{(u.M+M-1)}$, le u-ième bloc OFDM de M porteuses correspondant, obtenu en sortie du premier générateur *TF M* 301 à des instants multiples entiers de la période d'échantillonnage $T_e$, peut s'exprimer comme :

$$y((u.M + k_M).Te) = \sum_{m=0}^{M-1} Y_{(u.M+m)}.e^{2.j.\pi.\frac{m}{M}.k_M}$$

Après suréchantillonnage d'un facteur deux dans le domaine temporel, le premier sur-échantillonneur 400 délivre 2*M échantillons correspondant au u-ième bloc OFDM pris aux instants multiples entiers et demi-entiers de la période d'échantillonnage $T_e$.

Dans une variante, le premier module de suréchantillonnage 400 est implémenté sous la forme d'un filtre à réponse impulsionnelle finie, ou RIF, à phase linéaire de manière à obtenir une implémentation simple et qui n'induit pas de distorsion en phase du signal suréchantillonné.

Le signal numérique suréchantillonné correspondant est alors délivré au module de détermination de vecteur crête *MAX* 302. Reconsidérant le mode de réalisation décrit en relation avec les figures 1, 2 et 3 et en relation avec l'équation (Eq1), et tenant compte du présent suréchantillonnage, l'amplitude maximale d'indice I du vecteur crête, I étant un entier allant de 0 à 2*N-1, est égal au maximum de l'amplitude des échantillons d'indice I+r*2*N du bloc de 2*M échantillons temporels, avec r un entier allant de 0 à R-1.

Ainsi, le module de détermination de vecteur crête *MAX* 302 délivre un vecteur crête $MAXM_{u.M}[\,]$ associé au u-ième bloc de M symboles source qui peut s'exprimer comme :

$$MAXM_{u.M}[\ ] = \begin{bmatrix} MAX_{r=0}^{R-1}\{|y((u.M + r.N).Te)|\} \\ MAX_{r=0}^{R-1}\left\{\left|y\left(\left(u.M + r.N + \frac{1}{2}\right).Te\right)\right|\right\} \\ - - - - \\ MAX_{r=0}^{R-1}\{|y((u.M + r.N + l).Te)|\} \\ - - - - \\ MAX_{r=0}^{R-1}\left\{\left|y\left(\left(u.M + r.N + \frac{2.N - 2}{2}\right).Te\right)\right|\right\} \\ MAX_{r=0}^{R-1}\left\{\left|y\left(\left(u.M + r.N + \frac{2.N - 1}{2}\right).Te\right)\right|\right\} \end{bmatrix}$$

Dans une variante, les amplitudes maximales du vecteur crête sont déterminées à l'aide de deux lignes à retard de profondeur N, implémentées sous forme d'une succession de registres cadencés à $F_e = 1/T_e$, à N sorties intermédiaires. Une première des deux lignes à retard est associée au traitement des M échantillons pris aux instants multiples entiers de la période d'échantillonnage $T_e$ parmi les 2*M délivrés par le premier module de suréchantillonnage, ou suréchantillonneur 400. La deuxième ligne à retard est alors associée au traitement des M échantillons pris aux instants multiples demi-entiers de la période d'échantillonnage $T_e$ parmi les 2*M délivrés par le premier module de suréchantillonnage 400. L'entrée de chaque ligne à retard est le résultat du choix de l'amplitude maximale entre celle de l'échantillon $y((k_N + (r + 1).N + u.M).Te)$ ou $y((k_N + (r + 1).N + u.M + 1/2).Te)$ issus du premier module de suréchantillonnage 400 et les échantillons respectivement $y((k_N + r. N + u. M). Te)$ ou $y((k_N + r. N + u. M + 1/2). Te)$ provenant de la sortie des deux lignes à retard. Du fait du bouclage des lignes à retard sur la fonction de détermination de l'amplitude maximale disposée à leur entrée et de leur cadencement à $F_e = 1/T_e$, leur N sorties intermédiaires délivrent les éléments du vecteur crête tels que défini ci-dessus à la fin du traitement du u-ième bloc de M symboles source.

Sur la base de ce vecteur crête associé au u-ième bloc de M symboles source, la méthode PCTS implémentée dans l'atténuateur 303' traite successivement les R sous-blocs de N symboles entrelacés délivrés par l'entrelaceur INTERL. 300 sur la base du bloc de M symboles source composé des symboles $Y_{(u.M)}$, $Y_{(u.M+1)}$, ..., $Y_{(u.M+M-1)}$.

Ainsi, pour un r-ième sous-bloc de N symboles entrelacés composé des symboles notés $X_{(u.M+r.N)}$, $X_{(u.M+r.N+1)}$, ..., $X_{(u.M+r.N+N-1)}$, un signal temporel correspondant à la transformée de Fourier discrète inverse du r-ième sous-bloc de N symboles entrelacés est délivré par un module de transformée de Fourier de dimension N *TF N* 401. Ce signal peut s'exprimer à des instants multiples de la période d'échantillonnage $T_e$ comme :

$$x((u.M + r.N + k_N).Te) = \sum_{n=0}^{N-1} X_{(u.M+r.N+n)}.e^{2.j.\pi.\frac{n}{N}.k_N}$$

Dans une variante, N s'exprime comme une puissance de deux, permettant d'implémenter cette transformée de Fourier discrète comme une transformée de Fourier rapide.

Le signal numérique $x(.)$ est alors suréchantillonné d'un facteur deux dans le domaine temporel par un deuxième sur-échantillonneur 402 qui délivre un vecteur *INITN*[] de 2*N échantillons correspondants au r-ième sous-bloc de N symboles entrelacés du u-ième bloc OFDM pris aux instants multiples entiers et demi-entiers de la période d'échantillonnage $T_e$ qui s'exprime comme :

$$INITN_{(u.M+r.N)}[\ ] = \begin{bmatrix} \sum_{n=0}^{N-1} X_{(u.M+r.N+n)} \\ \sum_{n=0}^{N-1} X_{(u.M+r.N+n)}.e^{2.j.\pi.\frac{n}{N}.\frac{1}{2}} \\ - - - - \\ \sum_{n=0}^{N-1} X_{(u.M+r.N+n)}.e^{2.j.\pi.\frac{n}{N}.l} \\ - - - - \\ \sum_{n=0}^{N-1} X_{(u.M+r.N+n)}.e^{2.j.\pi.\frac{n}{N}.\frac{2.N-2}{2}} \\ \sum_{n=0}^{N-1} X_{(u.M+r.N+n)}.e^{2.j.\pi.\frac{n}{N}.\frac{2.N-1}{2}} \end{bmatrix}$$

Dans une variante, le deuxième sur-échantillonneur 402 est implémenté sous la forme d'un filtre à réponse impulsionnelle finie, ou RIF, à phase linéaire de manière à obtenir une implémentation simple et qui n'induit pas de distorsion en phase du signal suréchantillonné.

Le vecteur *INITN[]*, qui représente le signal temporel correspondant au r-ième sous-bloc de N symboles entrelacés, est alors délivré au module d'accumulation *ACCU* 403 de manière à pré-construire progressivement la suite des 2*N échantillons du signal temporel correspondant au signal obtenu après correction des N symboles entrelacés et l'application d'une transformée de Fourier discrète inverse sur les N symboles entrelacés corrigés correspondants avec interpolation d'un facteur deux.

Pour ce faire, le module d'accumulation *ACCU* 403 utilise les vecteurs complexes $GEN_{k_N}[\ ]$, délivrés par le module de génération 404, et représentant les échantillons temporels correspondant à la porteuse d'ordre $k_N$, $k_N$ étant un entier allant de 0 à N-1, en sortie de transformée de Fourier de dimension N. Ainsi, les composantes réelle et imaginaire de $GEN_{k_N}[\ ]$ sont les deux vecteurs $COS_{k_N}[\ ]$ et $SIN_{k_N}[\ ]$ s'exprimant, en tenant compte du suréchantillonnage temporel d'un facteur deux, comme :

$$COS_{k_N}[\ ] = \begin{bmatrix} 1 \\ \cos\left(\pi.\frac{k_N}{N}\right) \\ \overline{\ \ \ \ } \\ \cos\left(1.\pi.\frac{k_N}{N}\right) \\ \overline{\ \ \ \ } \\ \cos\left((2.N-2).\pi.\frac{k_N}{N}\right) \\ \cos\left((2.N-1).\pi.\frac{k_N}{N}\right) \end{bmatrix} \text{ et } SIN_{k_N}[\ ] = \begin{bmatrix} 0 \\ \sin\left(\pi.\frac{k_N}{N}\right) \\ \overline{\ \ \ \ } \\ \sin\left(1.\pi.\frac{k_N}{N}\right) \\ \overline{\ \ \ \ } \\ \sin\left((2.N-2).\pi.\frac{k_N}{N}\right) \\ \sin\left((2.N-1).\pi.\frac{k_N}{N}\right) \end{bmatrix}$$

Dans une variante, les éléments des deux vecteurs $COS_{k_N}[\ ]$ et $SIN_{k_N}[\ ]$ sont précalculés et stockés dans une mémoire. Dans une autre variante, ces valeurs sont calculées à la volée, par exemple à l'aide d'un algorithme du type CORDIC bien connu de l'homme du métier.

Le module d'accumulation *ACCU* 403 prend alors également en compte les déplacements complexes de correction $dX_{u.M+r.N+k_N} = dA_{u.M+r.N+k_N} + j.\ dB_{u.M+r.N+k_N}$, délivrés par le module de correction PCTS *CORR. SYMB.* 406 et à appliquer aux symboles $X_{u.M+r.N+k_N}$ destinés à moduler les porteuses d'ordre $k_N$ correspondantes du r-ième sous-bloc du u-ième bloc OFDM. Un vecteur signal, $dN_{(u.M+r.N+k_N)}[\ ]$, associé à la porteuse d'ordre $k_N$ modulée par ce déplacement $dX_{u.M+r.N+k_N}$ est alors déterminé avec pour expression :

$$dN_{(u.M+r.N+k_N)}[\ ] = \left(dA_{u.M+r.N+k_N} + j.\ dB_{u.M+r.N+k_N}\right).GEN_{k_N}[\ ]$$

Un vecteur signal complexe, $ACC_{(u.M+r.N+k_N)}[\ ]$, correspondant à la somme partielle des porteuses modulées par les symboles corrigés jusqu'à l'ordre $k_N$ - 1 est ainsi obtenu avec comme expression, pour $k_N \neq 0$ :

$$ACC_{(u.M+r.N+k_N)}[\ ] = INITN_{(u.M+r.N)}[\ ] + \sum_{n=0}^{k_N-1} dN_{(u.M+r.N+n)}[\ ]$$

On en déduit le vecteur $PREC_{(u.M+r.N+k_N)}[\ ]$ qui est délivré par le module d'accumulation *ACCU* 403 au module de détection d'extrema PCTS *DETECT. EXTREMA* 405 et qui s'exprime comme :

$$PREC_{(u.M+r.N+k_N)}[\ ] = \begin{cases} INITN_{(u.M+r.N)}[\ ] & \text{lorsque } k_N = 0 \\ ACC_{(u.M+r.N+k_N)}[\ ] & \text{autrement} \end{cases}$$

Ainsi, le vecteur $PREC_{(u.M+r.N+k_N)}[\ ]$ est représentatif de la somme partielle des $k_N$ premières porteuses du r-ième sous-bloc du u-ième bloc OFDM, ces porteuses étant modulées par les corrections de symboles préalablement déterminées lors d'itérations précédentes aux ordres inférieurs à $k_N$.

Il apparaît que le vecteur $PREC_{(u.M+r.N+k_N)}[\ ]$ ainsi défini représente le sous-bloc de N échantillons temporels correspondant à la transformée de Fourier inverse du sous-bloc de N symboles corrigés déterminés par l'application de la méthode de réduction des extrema PCTS au r-ième sous-bloc de symboles entrelacés lorsque $k_N = N$ - 1, i.e. après la dernière itération de l'algorithme PCTS appliqué au r-ième sous-bloc de N symboles entrelacés considéré.

Par ailleurs, selon le principe de l'algorithme PCTS tel que décrit dans la demande de brevet français FR 3 003 107, la somme partielle définissant le vecteur PREC$_{(u.M+r.N+k_N)}$[ ] permet de prendre en compte les effets des corrections apportées aux symboles modulant les porteuses d'ordre inférieur à un ordre donné pour déterminer la correction à apporter au symbole modulant la porteuse à ce même ordre donné.

Pour ce faire, le module de détection d'extrema PCTS *DETECT. EXTREMA* 405 opère une opération de seuillage sur le vecteur PREC$_{(u.M+r.N+k_N)}$[ ] de manière à délivrer un vecteur représentatif des extrema présents dans le signal correspondant à la somme partielle décrite ci-dessus pour permettre au module de correction PCTS *CORR. SYMB.* 406 de déterminer la correction à apporter au symbole destiné à moduler la porteuse d'ordre suivant.

Plus précisément, dans ce mode de réalisation, le module de détection d'extrema PCTS *DETECT. EXTREMA* 405 délivre au module de correction PCTS *CORR. SYMB.* 406 un vecteur DETECT$_{(u.M+r.N+k_N)}$[ ] dont l'élément d'indice l s'exprime via l'équation (Eq2) :

$$DETECT_{(u.M+r.N+k_N,l)} = \begin{cases} \left( \gamma_{(u.M,l)} \cdot \dfrac{|PREC_{(u.M+r.N+k_N,l)}|}{|INITN_{(u.M+r.N,l)}|} - 1 \right) \cdot PREC_{(u.M+r.N+k_N,l)} \\ \qquad\qquad lorsque \ \gamma_{(u.M,l)} \cdot \dfrac{|PREC_{(u.M+r.N+k_N,l)}|}{|INITN_{(u.M+r.N,l)}|} \geq 1 \\ 0 \ autrement \end{cases}$$

avec :

$$\gamma_{(u.M,l)} = \left( \frac{|MAXM_{(u.M,l)}|}{\alpha} \right)$$

Le module de correction PCTS *CORR. SYMB.* 406 détermine alors la correction $dX_{u.M+r.N+k_N} = dA_{u.M+r.N+k_N} + j.\, dB_{u.M+r.N+k_N}$, à appliquer au symbole $X_{u.M+r.N+k_N}$ destiné à moduler la porteuse d'ordre $k_N$ du r-ième sous-bloc du u-ième bloc OFDM en lui imposant d'être proportionnel au produit de corrélation entre le vecteur DETECT$_{(u.M+r.N+k_N)}$[ ] délivré par le module de détection d'extrema PCTS 405, et la porteuse d'ordre $k_N$, i.e. :

$$dX_{k_N} = -\mu.\, SIGCORR_{(u.M+r.N+k_N)}$$

où $\mu > 0$ et :

$$SIGCORR_{(u.M+r.N+k_N)} = \sum_{l=0}^{2.N-1} DETECT_{(u.M+r.N+k_N,l)} \cdot GEN^*_{(k_N,l)}$$

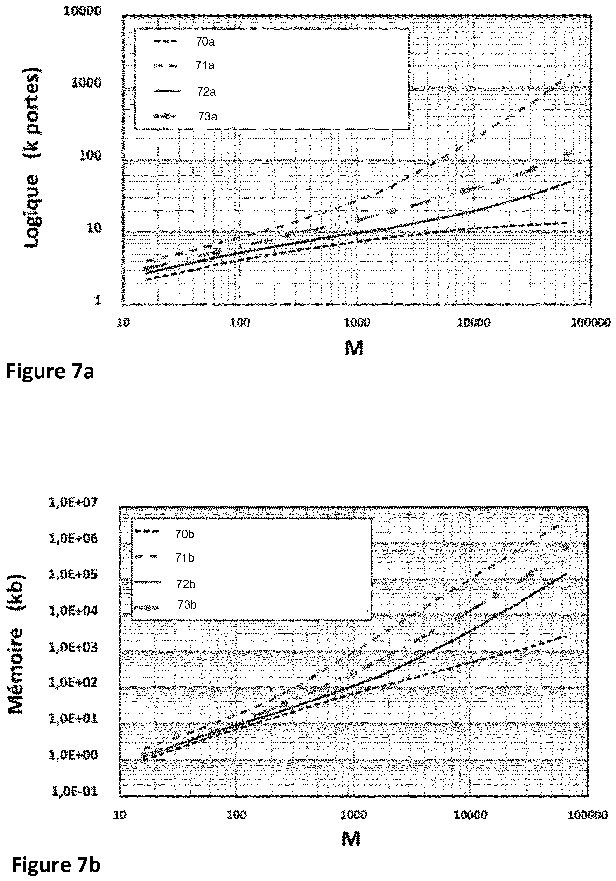

On décrit maintenant, en relation avec les **figures 7a et 7b** les gains obtenus en nombre de portes logiques et en taille mémoire nécessaire à l'implémentation d'une méthode de réduction d'extrema du type PCTS en utilisant la technique décrite.

Plus particulièrement, la réduction de complexité de l'algorithme implémenté va dépendre du rapport M/N=R, et sera d'autant plus importante que ce rapport sera élevé. Néanmoins cette réduction de complexité lorsque M/N croît trouve des limites liées à une réduction de l'efficacité de la technique décrite due au fait que l'ensemble des N valeurs maximales détectées du vecteur crête *MAXM$_{u.M}$*[ ] associé au u-ième bloc de M symboles source, sont d'autant plus grandes à l'initialisation et se rapprochent d'autant plus de la valeur de seuil imposé. En effet chaque valeur maximale résulte de la comparaison de R échantillons entre eux et cette valeur devient en moyenne d'autant plus élevée que R est important. Ceci nécessite alors de relever la valeur de seuil pour que l'algorithme puisse continuer à fonctionner correctement mais donc au détriment de la réduction de PAPR finale qui est obtenue.

Il est donc intéressant d'évaluer le rapport M/N=R offrant la meilleure réduction de compromis. Dans le cas où M et N s'expriment comme des puissances de deux, le rapport M/N=R peut avantageusement être pris en compte à travers le paramètre β défini par la relation $q = ceil(\beta p)$ avec $\frac{1}{2} < \beta < 1$, M=$2^p$ et N=$2^q$.

Les figures 7a et 7b représentent alors, avec une échelle logarithmique, les complexités comparées respectivement en cellules logique et en mémoire des deux algorithmes, i.e. l'algorithme PCTS seul (courbes 71a, 71b) et l'algorithme PCTS encapsulé dans la méthode décrite, ainsi que celles de la FFT correspondante (courbes 70a, 70b - FFT taille M seule) prise comme référence pour deux valeurs de β : 2/3 (courbes 72a, 72b - PCTS et décimation FFT - Beta=2/3) et ¾ (courbes 73a, 73b- PCTS et décimation FFT - Beta=3/4).

On constate que la réduction de complexité devient très importante lorsque β devient inférieur à 3/4. Il en résulte qu'un bon compromis peut être obtenu lorsque β se situe aux alentours de 2/3 ; pour cette valeur on obtient alors les valeurs de M, N et R telles que données dans le tableau 1.

**Tableau 1**

| **M** | 16 | 64 | 256 | 1024 | 2048 | 8192 | 32768 |
|---|---|---|---|---|---|---|---|
| **N** | 8 | 16 | 64 | 128 | 256 | 512 | 1024 |
| **R** | 2 | 4 | 4 | 8 | 8 | 16 | 32 |

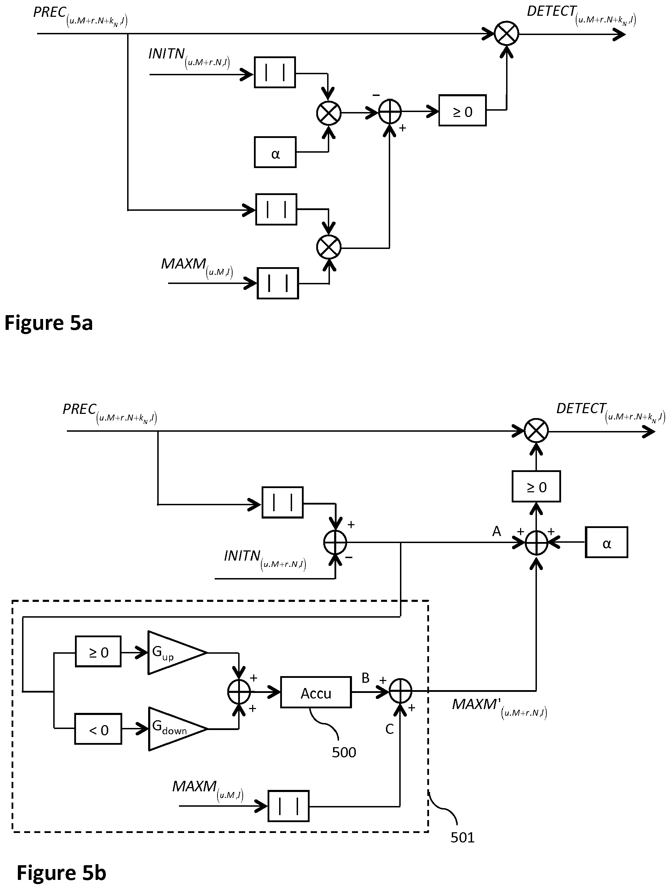

On décrit maintenant, en relation avec les **figures 5a et 5b** des variantes d'implémentation des procédés de génération et d'atténuation des extrema selon différents modes de réalisation de l'invention.

Il apparaît en effet dans le mode de réalisation décrit en relation avec la figure 4 que l'équation (Eq2) fait intervenir des divisions et se trouve être de ce fait complexe à implémenter.

La figure 5a présente alors une alternative dans laquelle l'élément d'indice I du vecteur $DETECT_{(u.M+r.N+k_N)}[\ ]$ s'exprime comme le produit de l'élément d'indice I du vecteur $PREC_{(u.M+r.N+k_N)}[\ ]$ et d'un facteur de pondération égal au maximum de 0 et de $|MAXM_{(u.M,I)}|.|PREC_{(u.M+r.N+k_N,I)}| - \alpha .|INITN_{(u.M+r.N,I)}|$.

Le même effet de seuillage que recherché via l'équation (Eq2) est ainsi obtenu, mais sans nécessiter l'implémentation de fonctions coûteuses en terme de charge de calcul comme les divisions par exemple.

Par ailleurs, il apparaît que la correction des symboles entrelacés obtenue par l'application successive de la méthode d'atténuation des extrema à chaque sous-bloc de N symboles entrelacés peut conduire, outre la minimisation des extrema présents dans le vecteur crête d'origine, à la génération de nouveaux extrema du bloc OFDM correspondant, non présents dans le vecteur crête d'origine, et donc non pris en compte par défaut lors de l'application de la méthode d'atténuation des extrema à chacun des sous-blocs de N symboles entrelacés.

Dans le mode de réalisation décrit en relation avec les figures 1, 2 et 3, cette génération est liée à la sommation cohérente des sous-blocs d'échantillons temporels correspondant aux transformées de Fourier discrètes inverses des R sous-blocs de N symboles corrigés, comme donné par l'équation (Eq1). Plus précisément, il peut ainsi se produire une régénération d'une ou plusieurs crêtes de signal à des échantillons d'indice $k_M$ du bloc OFDM considéré du fait de la sommation de manière cohérente des R échantillons d'indice $k_N$ de ces sous-blocs d'échantillons temporels correspondant aux symboles corrigés.

Ainsi, dans un mode de réalisation, il est proposé que le vecteur crête soit mis à jour entre chaque itération de la méthode de réduction des extrema par déplacement de symboles de manière à tenir compte de la génération potentielle de nouveaux extrema au fur et à mesure de la correction des sous-blocs de N symboles entrelacés.

Pour ce faire, il est proposé que la méthode de réduction des extrema se base non pas directement sur le vecteur crête d'origine $MAXM_{u.M}[\ ]$ délivré par le module de détermination de vecteur crête 302, mais sur un vecteur crête $MAXM'_{u.M+r.N}[\ ]$ mis à jour à la fin du traitement du r-ième sous-bloc de N symboles entrelacés du u-ième bloc de M symboles source par l'atténuateur 303', et d'en tenir compte dans le traitement du r+1-ième sous-bloc suivant.

Suivant le schéma illustré sur la figure 5b, il apparaît qu'à l'initialisation du traitement, i.e. lorsque le procédé décrit est appliqué à un nouveau bloc de M symboles source, par exemple le u-ième bloc, la correction apportée au vecteur crête d'origine $MAXM_{(u.M)}[\ ]$ est nulle. Dans le mode de réalisation décrit en relation avec la figure 4 où la méthode de réduction des extrema appliquée aux sous-blocs de symboles entrelacés est une méthode PCTS, l'élément d'indice I du vecteur $DETECT_{(u.M+r.N+k_N)}[\ ]$ dépend alors uniquement de l'élément d'indice I du vecteur crête d'origine $MAXM_{(u.M,I)}$ par rapport au seuil $\alpha$ imposé (signaux des branches A et B nuls). Puis, durant le traitement du premier sous-bloc de N symboles entrelacés par l'atténuateur 303', la variation d'amplitude de l'échantillon d'indice I est prise en compte dans la combinaison du signal de la branche A avec celui de la branche C.

A la fin du traitement du premier sous-bloc de N symboles entrelacés par l'atténuateur 303', la variation de l'amplitude de l'échantillon d'indice I, correspondant à la transformée de Fourier discrète inverse du sous-bloc de N symboles entrelacés corrigés, par rapport à son état initial donné par l'amplitude de l'échantillon d'indice I du vecteur $INITN_{(u.M+1.N)}$, est mémorisée dans un accumulateur $ACCU$ 500 en ayant au préalable été pondérée différemment suivant son signe.

Ainsi, dans des variantes, la variation de l'amplitude de l'échantillon par rapport à sa valeur initiale est comptabilisée avec un facteur Gup qui vaut 1,0 lorsque celui-ci a été amplifié car il pourra potentiellement se sommer de façon constructive avec les autres échantillons de même indice des R-1 autres sous-blocs. La variation est comptabilisée avec un facteur Gdown qui vaut 0,707 lorsqu'il a été atténué, correspondant à une sommation quadratique (contribution en racine carrée de la somme des carrés des modules) avec l'amplitude des autres échantillons de même ordre, de manière à ne pas surestimer l'impact sur le signal final de la réduction obtenue.

Au début du traitement du deuxième sous-bloc de N symboles entrelacés par l'atténuateur 303', le signal en sortie de la branche B tient donc compte de la correction précédemment effectuée.

Ainsi, l'accumulateur *ACCU* 500 étant réactualisé à la fin du traitement de chaque sous-bloc de N symboles entrelacés, le vecteur crête mis à jour $MAXM'_{u.M+R.N}[\ ]$, résultant de la sommation des branches B et C, fournit après le traitement des R sous-blocs de N symboles entrelacés une estimation de l'amplitude des échantillons dans le domaine temporel du u-ième bloc OFDM correspondant à la transformée de Fourier discrète inverse du bloc de M symboles source corrigés correspondant.

Par ailleurs, l'accumulateur *ACCU* 500 est alors remis à zéro à l'issue du traitement par l'atténuateur 303' du dernier sous-bloc de N symboles entrelacés d'un bloc de M symboles source donné en vue du traitement du prochain bloc de M symboles source.

Dans une variante, le module de mise à jour du vecteur crête 501 est implémenté directement dans le module de détermination de vecteur crête *MAX 302*. En effet, il apparaît que le module de mise à jour du vecteur crête 501 ne nécessite que le résultat final du traitement de chacun des R sous-blocs de N symboles entrelacés par l'atténuateur 303' pour mettre à jour le vecteur crête (ce résultat pouvant être obtenu via l'implémentation de toute méthode d'atténuation des extrema par correction de symboles). Ce résultat de traitement peut alors être transmis par l'atténuateur 303' au module de détermination de vecteur crête *MAX* 302.

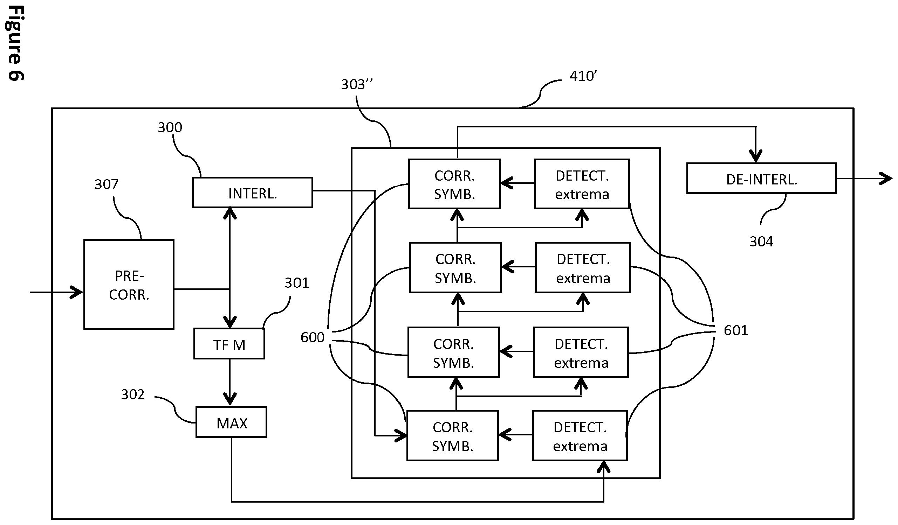

On décrit maintenant, en relation avec la **figure 6** un dispositif d'atténuation des extrema 410' d'un signal multiporteuse de type OFDM selon un mode de réalisation particulier de l'invention.

Dans ce mode de réalisation, la méthode de réduction des extrema mise en œuvre par l'atténuateur 303" est une méthode par correction de symboles ACE.

La méthode ACE est en particulier préconisée dans la norme DVB-T2 et le document de standardisation « ETSI EN 302 755 V1.3.1 (2012-04) Digital Video Broadcasting (DVB) ; Frame structure channel coding and modulation for a second generation digital terrestrial television broadcasting system (DVB-T2) » décrit les fonctions correspondantes devant être implémentées.

Parmi ces fonctions, on retrouve les deux principales fonctions de détection des extrema du bloc OFDM sur lequel la méthode est appliquée, et de correction des symboles correspondants. Ces fonctions sont ici mises en œuvre respectivement dans un module de correction ACE *CORR. SYMB.* 600 et dans un module de détection d'extrema ACE *DETECT. EXTREMA* 601.

La méthode ACE présente la particularité d'être itérative, ce qui fait que dans la perspective d'une implémentation temps réel, le travail à fréquence plus élevée ne peut que très partiellement suffire à compenser le temps nécessaire à réaliser l'ensemble des itérations indispensables (de 5 à 20 pour des résultats significatifs) pour obtenir un niveau de réduction des extrema acceptable. L'algorithme doit donc être en partie ou entièrement déployé dans le cadre d'une application temps réel et les deux fonctions de détection des extrema *DETECT. EXTREMA* et de correction *CORR. SYMB.* se retrouvent alors dupliquées et cascadées sur de multiples niveaux.

Ainsi, un exemple de mise œuvre de l'algorithme ACE à 4 itérations est représenté à la figure 6, auquel est appliqué le procédé de traitement en sous-blocs de N symboles entrelacés décrit dans la présente demande.

Le **tableau 2** présente alors la complexité et la latence comparée de l'implémentation directe de la méthode ACE telle que préconisée dans le standard DVB-T2, et celle de la méthode ACE à laquelle est appliqué le procédé de traitement en sous-blocs tel qu'illustré sur la figure 6.

Cette complexité est comptabilisée en nombre de transformées de Fourier discrètes (implémentée sous forme de FFT ici) devant être calculées pour traiter un bloc OFDM de M porteuses modulées par M symboles source, et ce pour trois valeurs de M (M = 64, 2048 et 8192). Par ailleurs, trois valeurs de facteur de décimation R utilisé pour déterminer les sous-blocs de N symboles entrelacés sont également considérées (R=4, 8 et 16).

On rappelle ici que la complexité de calcul d'une FFT de taille M évolue en M.Log(M), et il est évalué que l'ensemble des fonctions d'entrelacement, de désentrelacement, et de détection nécessaires à la mise en œuvre du procédé revendiqué présente une complexité équivalente à 0,5 FFT de taille M.

La latence est quant à elle comptabilisée par rapport à la latence, $L_M$, correspondant au temps de calcul d'une FFT de taille M implémentée dans une même technologie.

**Tableau 2**

| Algorithme | ACE seul (4 Itérations) | ACE avec le procédé revendiqué (4 Itérations) | ACE seul (4 Itérations) | ACE avec le procédé revendiqué (4 Itérations) | ACE seul (4 Itérations) | ACE avec le procédé revendiqué (4 Itérations) |
|---|---|---|---|---|---|---|
| M | 64 | 64 | 2048 | 2048 | 8192 | 8192 |
| R | 1 | 4 | 1 | 8 | 1 | 16 |
| N | 64 | 16 | 2048 | 256 | 8192 | 512 |
| Nombre de FFT de taille M | 8 | 1,5 | 8 | 1,5 | 8 | 1,5 |
| Nombre de FFT de taille N | - | 8 | - | 8 | - | 8 |
| Complexité | 100% | ≤ 40% | 100% | ≤ 30% | 100% | ≤ 25% |
| Latence | $8.L_M$ | $5.L_M$ | $8.L_M$ | $4.L_M$ | $8.L_M$ | $3,5.L_M$ |

Il est ainsi constaté une réduction très significative de la complexité de mise en œuvre, d'autant plus que M et R sont élevés, mais également une réduction notable de la latence de l'algorithme.

Le **tableau 3** montre les mêmes comparaisons effectuées pour 8 itérations cette fois de l'algorithme ACE. Il apparaît que pour un nombre plus important d'itérations, les gains en réduction de complexité et en latence sont encore plus importants.

**Tableau 3**

| Algorithme | ACE seul (8 Itérations) | ACE avec le procédé revendiqué (8 Itérations) | ACE seul (8 Itérations) | ACE avec le procédé revendiqué (8 Itérations) | ACE seul (8 Itérations) | ACE avec le procédé revendiqué (8 Itérations) |
|---|---|---|---|---|---|---|
| M | 64 | 64 | 2048 | 2048 | 8192 | 8192 |
| R | 1 | 4 | 1 | 8 | 1 | 16 |
| N | 64 | 16 | 2048 | 256 | 8192 | 512 |
| Nombre de FFT de taille M | 16 | 1,5 | 16 | 1,5 | 16 | 1,5 |
| Nombre de FFT de taille N | - | 16 | - | 16 | - | 16 |
| Complexité | 100% | ≤ 26% | 100% | ≤ 20% | 100% | ≤ 15% |
| Latence | $16.L_M$ | $7.L_M$ | $16.L_M$ | $5.L_M$ | $16.L_M$ | $4.L_M$ |

Il apparaît ainsi que pour une application de diffusion suivant la norme DVBT2 qui est basée sur une modulation OFDM utilisant 32768 porteuses (M=32768) et pour laquelle le facteur R peut valoir 32, i.e. la technique décrite met en œuvre un sous-module ACE utilisant une transformée de Fourier sur 1024 symboles entrelacés (N=1024), les gains attendus en complexité et en latence sont très importants.

Dans une variante, la technique décrite est appliquée non pas directement à un bloc de M symboles source, mais à un bloc de M symboles source pré-corrigés par le module de pré-correction *PRE-CORR.* 307. Selon le présent mode de réalisation correspondant à un atténuateur 303" mettant en œuvre une méthode par correction de symboles ACE, cet état intermédiaire correspond à un déplacement des symboles sources vers l'extérieur de la constellation par rapport à leur valeur initiale, i.e. à un éloignement des symboles par rapport au centre de la constellation. En effet, l'algorithme ACE a tendance à rechercher le minima de la puissance du signal modulé, ce qui a pour conséquence de freiner les déplacements des symboles corrigés vers l'extérieur de la constellation lors de la correction des crêtes de plus grande dynamique. Ainsi, la pré-correction des symboles source par le module de pré-correction *PRE-CORR.* 307 permet de prendre en compte ce phénomène de résistance aux déplacements vers l'extérieur de la constellation en pré-positionnant les symboles à une position prédéterminée entre leur position initiale et une position de correction extrême, améliorant ainsi la rapidité de convergence du procédé global.

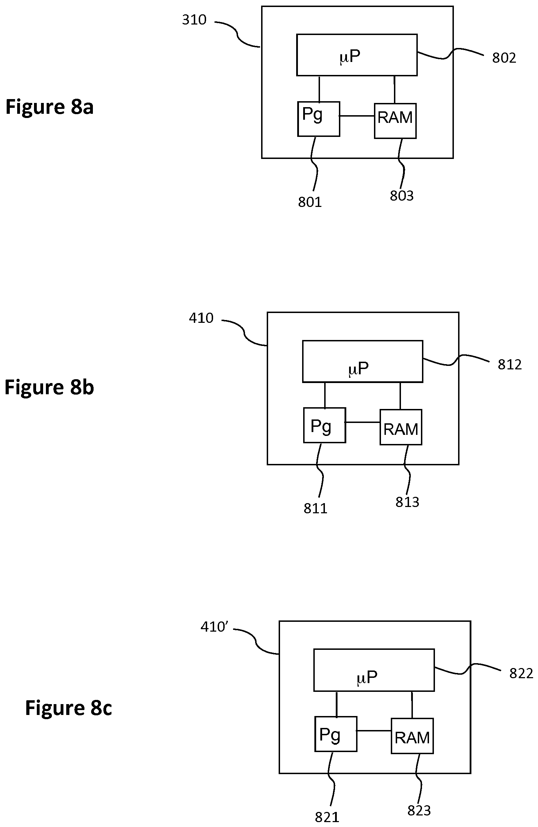

Les **figures 8a, 8b et 8c** présentent des exemples de structures de dispositif de génération 310 d'un signal multiporteuse de type OFDM ainsi que d'atténuation des extrema 410, 410' d'un signal multiporteuse de type OFDM, permettant la mise en œuvre d'un procédé décrit en relation avec la figure 1.

Le dispositif de génération 310 ainsi que le dispositif d'atténuation des extrema 410, 410' comprennent une mémoire vive 803, 813, 823 (par exemple une mémoire RAM), une unité de traitement 802, 812, 822 équipée par exemple d'un processeur, et pilotée par un programme d'ordinateur stocké dans une mémoire morte 801, 811, 821 (par exemple une mémoire ROM ou un disque dur). A l'initialisation, les instructions de code du programme d'ordinateur sont par exemple chargées dans la mémoire vive 803, 813, 823 avant d'être exécutées par le processeur de l'unité de traitement 802, 812, 822.

Ces figures 8a, 8b et 8c illustrent seulement une manière particulière, parmi plusieurs possibles, de réaliser le dispositif de génération 310 ainsi que le dispositif d'atténuation des extrema 410, 410', afin qu'ils effectuent certaines étapes du procédé détaillé ci-dessus, en relation avec la figure 1 (dans l'un quelconque des différents modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif de génération 310 et/ou le dispositif d'atténuation des extrema 410, 410' est(/sont) réalisé(s) avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

**1.** Procédé de génération d'un signal multiporteuse de type OFDM comprenant des blocs (200) OFDM constitués de M porteuses modulées par des symboles de constellation, dits symboles source, un bloc de M symboles source correspondant à un bloc OFDM de M porteuses,

       **caractérisé en ce qu'**il comprend, d'une part :

          • Une étape d'entrelacement (100) des M symboles d'un bloc de symboles source en R sous-blocs (201) de N symboles entrelacés, où R, M et N sont des entiers naturels tels que M=RxN ;

       Et d'autre part des étapes de :

          • obtention (101) d'un bloc de M échantillons temporels par transformée de Fourier discrète dudit bloc de M symboles source ;
          • détermination (102) de N amplitudes maximales parmi lesdits échantillons dudit bloc de M échantillons temporels et formation (102) d'un vecteur contenant lesdites N amplitudes maximales, dit vecteur crête ;

       **et en ce qu'**il comprend également des étapes de :

          • atténuation (103), par correction de symboles de constellation, des extrema d'un sous-bloc de N échantillons temporels correspondant à la transformée de Fourier discrète d'un desdits R sous-blocs de N symboles entrelacés, ladite correction prenant en compte au moins ledit vecteur crête et délivrant un sous-bloc de N symboles entrelacés corrigés,
          ladite étape d'atténuation, répétée pour chaque sous-bloc parmi lesdits R sous-blocs de N symboles entrelacés, délivrant R sous-blocs de N symboles entrelacés corrigés;
          • désentrelacement (104) desdits R sous-blocs de N symboles entrelacés corrigés délivrant un bloc de M symboles source corrigés ; et
          • génération (105) d'un bloc OFDM dudit signal multiporteuse par transformée de Fourier discrète dudit bloc de M symboles source corrigés.

2. Procédé de génération selon la revendication 1,
**caractérisé en ce que,** lors de ladite étape d'entrelacement des M symboles d'un bloc de symboles source en R sous-blocs de N symboles entrelacés, un i-ième sous-bloc de N symboles entrelacés, i étant un entier allant de 1 à R, comprend des symboles d'indice (i-1)+k*R dudit bloc de symboles source, k étant un entier allant de 0 à N-1.

3. Procédé de génération selon l'une quelconque des revendications 1 ou 2,
**caractérisé en ce qu'**un élément d'indice j dudit vecteur crête, j étant un entier allant de 0 à N-1, est égal à ladite amplitude maximale des échantillons d'indice j+r*N dudit bloc de M échantillons temporels, avec r un entier allant de 0 à R-1.

4. Procédé de génération selon l'une quelconque des revendications 1 à 3 dans lequel R>1,

   **caractérisé en ce que** ladite étape d'atténuation des extrema par correction de symboles de constellation est effectuée successivement pour chacun desdits R sous-blocs de N symboles entrelacés,
   **et en ce que** :

   - ladite étape d'atténuation effectuée pour lesdits sous-blocs 1 à v-1 de N symboles entrelacés, où v est un entier compris entre 2 et R, délivre v-1 sous-blocs de N symboles entrelacés corrigés ;
   - lorsque ladite étape d'atténuation est effectuée pour un v-ième sous-bloc de N symboles entrelacés, ledit vecteur crête pris en compte par ladite correction est mis à jour en fonction d'une amplitude d'au moins un échantillon temporel parmi v-1 sous-blocs de N échantillons temporels entrelacés corrigés correspondant à la transformée de Fourier discrète desdits v-1 sous-blocs de N symboles entrelacés corrigés préalablement obtenus.

5. Procédé de génération selon la revendication 4,
**caractérisé en ce que** lorsque ladite étape d'atténuation est effectuée pour ledit v-ième sous-bloc de N symboles entrelacés, ladite mise à jour dudit vecteur crête pris en compte par ladite correction correspond, pour un élément d'indice s dudit vecteur crête, s étant un entier compris entre 0 et N-1, à :

   • une incrémentation dudit élément d'indice s d'une valeur correspondant à une différence, pondérée d'un premier facteur correctif Gup, entre une amplitude d'un échantillon d'indice s d'un sous-bloc de N échantillons temporels entrelacés corrigés correspondant à la transformée de Fourier discrète dudit sous-bloc de rang v-1 de N symboles entrelacés corrigés préalablement obtenu, et une amplitude d'un échantillon d'indice s d'un sous-bloc de N échantillons temporels entrelacés correspondant à la transformée de Fourier discrète dudit sous-bloc de rang v-1 de N symboles entrelacés lorsque ladite différence est positive ou nulle ;
   • une décrémentation dudit élément d'indice s d'une valeur correspondant à ladite différence, pondérée d'un second facteur correctif Gdown, lorsque ladite différence est négative ;

6. Procédé de génération selon la revendication 5, dans lequel ledit premier facteur correctif Gup vaut 1 et ledit second facteur correctif Gdown vaut 0,707.

7. Procédé de génération selon l'une quelconque des revendications 1 à 6, **caractérisé en ce que**, à l'issue de ladite étape d'obtention d'un bloc de M échantillons temporels par transformée de Fourier discrète dudit bloc de M symboles source, il met en œuvre une étape de suréchantillonnage dudit bloc de M échantillons temporels obtenu.

8. Procédé de génération selon l'une quelconque des revendications 1 à 7 dans lequel ladite atténuation des extrema par correction des symboles de constellation met en œuvre une correction appartenant au groupe comprenant :

   • une correction ACE (pour « Active Constellation Extension » en anglais) ;
   • une correction TI-CES (pour « Tone Injection - Constellation Extension Scheme » en anglais) ;
   • une correction CD (pour « Constellation Distortion » en anglais) ;
   • une correction TR (pour « Tone Réservation » en anglais) ; et
   • une correction PCTS (pour « Pre-Constructed Temporal Signal » en anglais).

9. Procédé de génération selon l'une quelconque des revendications 1 à 8, **caractérisé en ce qu'il** comprend en outre une étape préliminaire de pré-correction dudit bloc de M symboles source, un symbole source étant pré-corrigé d'une valeur de correction intermédiaire prédéfinie entre une valeur de correction nulle et une valeur de correction extrême.

**10.** Procédé d'atténuation d'extrema d'un signal multiporteuse de type OFDM comprenant une étape d'atténuation (103), par correction de symboles de constellation, des extrema d'un bloc de N échantillons temporels correspondant à une transformée de Fourier discrète d'un bloc de N symboles de constellation, ladite correction prenant en compte un vecteur crête représentatif des extrema dudit signal multiporteuse et délivrant un bloc de N symboles corrigés,

> **caractérisé en ce que,** ledit signal multiporteuse de type OFDM comprenant des blocs (200) OFDM constitués de M porteuses modulées par des symboles de constellation, dits symboles source, un bloc de M symboles source correspondant à un bloc OFDM de M porteuses :
>
> > • ledit bloc de N symboles de constellation est un sous-bloc (201) parmi R sous-blocs de N symboles entrelacés obtenus par entrelacement (100) de M symboles d'un bloc de symboles source, où R, M et N sont des entiers naturels tels que M=RxN ;
> > • ledit vecteur crête est obtenu par détermination (102) de N amplitudes maximales parmi des échantillons temporels obtenus par transformée de Fourier discrète (101) dudit bloc de M symboles source ;
>
> **et en ce qu'**il comprend une étape de désentrelacement (104) de R sous-blocs de N symboles entrelacés corrigés, obtenus par répétition de ladite étape d'atténuation, pour chaque bloc de N symboles de constellation parmi lesdits R sous-blocs de N symboles entrelacés.

**11.** Produit programme d'ordinateur, comprenant des instructions de code de programme pour la mise en œuvre d'un procédé selon l'une quelconque des revendications 1 à 9, lorsque ledit programme est exécuté par un processeur.

**12.** Produit programme d'ordinateur, comprenant des instructions de code de programme pour la mise en œuvre d'un procédé selon la revendication 10, lorsqu'il est exécuté par un processeur.

**13.** Dispositif de génération (310) d'un signal multiporteuse de type OFDM comprenant des blocs (200) OFDM constitués de M porteuses modulées par des symboles de constellation, dits symboles source, un bloc de M symboles source correspondant à un bloc OFDM de M porteuses,

> **caractérisé en ce qu'il** comprend, d'une part :
>
> > • un entrelaceur (300) de M symboles d'un bloc de symboles source en R sous-blocs (201) de N symboles entrelacés, où R, M et N sont des entiers naturels tels que M=RxN ;
>
> Et d'autre part :
>
> > • un premier générateur (301) d'un bloc de M échantillons temporels par transformée de Fourier discrète dudit bloc de M symboles source ;
> > • un calculateur (302) de N amplitudes maximales parmi lesdits échantillons dudit bloc de M échantillons temporels et un second générateur (302) d'un vecteur contenant lesdites N amplitudes maximales, dit vecteur crête ;
>
> **et en ce qu'**il comprend également :
>
> > • un atténuateur (303, 303', 303"), par correction de symboles de constellation, d'extrema d'un sous-bloc de N échantillons temporels correspondant à la transformée de Fourier discrète d'un sous-bloc de N symboles entrelacés, ladite correction prenant en compte au moins ledit vecteur crête et délivrant un bloc de N symboles entrelacés corrigés,
> > • un désentrelaceur (304) de R sous-blocs de N symboles entrelacés corrigés délivrant un bloc de M symboles source corrigés ; et
> > • un troisième générateur (305) d'un bloc OFDM dudit signal multiporteuse par transformée de Fourier discrète dudit bloc de M symboles source corrigés.

**14.** Dispositif d'atténuation d'extrema (410, 410') d'un signal multiporteuse de type OFDM comprenant un atténuateur (303, 303', 303"), par correction de symboles de constellation, des extrema d'un bloc de N échantillons temporels correspondant à une transformée de Fourier discrète d'un bloc de N symboles de constellation, ladite correction prenant en compte un vecteur crête représentatif des extrema dudit signal multiporteuse et délivrant un bloc de N symboles corrigés,

**caractérisé en ce que,** ledit signal multiporteuse de type OFDM comprenant des blocs (200) OFDM constitués de M porteuses modulées par des symboles de constellation, dits symboles source, un bloc de M symboles source correspondant à un bloc OFDM de M porteuses, ledit dispositif comprend :

• un entrelaceur (300) de M symboles d'un bloc de symboles source en R sous-blocs (201) de N symboles entrelacés, où R, M et N sont des entiers naturels tels que M=RxN, ledit bloc de N symboles de constellation étant un sous-bloc parmi lesdits R sous-blocs de N symboles entrelacés ;
• un calculateur (302) de N amplitudes maximales parmi des échantillons temporels obtenus par transformée de Fourier discrète dudit bloc de M symboles source et un générateur (302) d'un vecteur contenant lesdites N amplitudes maximales, dit vecteur crête ;

**et en ce qu'**il comprend également :

• un désentrelaceur (304) de R sous-blocs de N symboles entrelacés corrigés délivrant un bloc de M symboles source corrigés.

**Patentansprüche**

1. Verfahren zur Erzeugung eines OFDM-Mehrträgersignals, das OFDM-Blöcke (200) umfasst, die von M Trägern gebildet sind, die von Konstellationssymbolen, den Quellsymbolen, moduliert werden, wobei ein Block von M Quellsymbolen einem OFDM-Block von M Trägern entspricht, **dadurch gekennzeichnet, dass** es einerseits Folgendes umfasst:

• Einen Schritt des Verschachtelns (100) der M Symbole eines Quellsymbolblocks zu R Unterblöcken (201) von N verschachtelten Symbolen, wobei R, M und N natürliche Zahlen sind, wie zum Beispiel M = R x N;

Und andererseits die folgenden Schritte:

• Erhalten (101) eines Blocks von M Zeitabtastwerten durch die diskrete Fourier-Transformierte des Blocks von M Quellsymbolen;
• Bestimmen (102) von N Maximalamplituden aus den Abtastwerten des Blocks von M Zeitabtastwerten und Bilden (102) eines Spitzenvektors, der die N Maximalamplituden enthält;

und dadurch, dass es ebenfalls die folgenden Schritte umfasst:

• Dämpfen (103), durch Korrektur von Konstellationssymbolen, der Extrema eines Unterblocks von N Zeitabtastwerten, der der diskreten Fourier-Transformierten eines der R Unterblöcke von N verschachtelten Symbolen entspricht, wobei die Korrektur wenigstens den Spitzenvektor berücksichtigt und einen Unterblock von N korrigierten verschachtelten Symbolen liefert,
wobei der Schritt des Dämpfens, der für jeden Unterblock aus den R Unterblöcken von N verschachtelten Symbolen wiederholt wird, R Unterblöcke von N korrigierten verschachtelten Symbolen liefert;
• Entschachteln (104) der R Unterblöcke von N korrigierten verschachtelten Symbolen, das einen Block von M korrigierten Quellsymbolen liefert; und
• Erzeugen (105) eines OFDM-Blocks des Mehrträgersignals durch die diskrete Fourier-Transformierte des Blocks von M korrigierten Quellsymbolen.

2. Erzeugungsverfahren nach Anspruch 1,
**dadurch gekennzeichnet, dass** beim Schritt des Verschachtelns der M Symbole eines Quellsymbolblocks zu R Unterblöcken von N verschachtelten Symbolen ein i-ter Unterblock von N verschachtelten Symbolen, wobei i eine Ganzzahl von 1 bis R ist, Symbole mit Index (i-1)+k*R des Quellsymbolblocks umfasst, wobei k eine Ganzzahl von 0 bis N-1 ist.

3. Erzeugungsverfahren nach einem der Ansprüche 1 oder 2,
**dadurch gekennzeichnet, dass** ein Element mit Index j des Spitzenvektors, wobei j eine Ganzzahl von 0 bis N-1 ist, gleich der Maximalamplitude der Abtastwerte mit Index j+r*N des Blocks von M Zeitabtastwerten ist, wobei r eine Ganzzahl von 0 bis R-1 ist.

**4.** Erzeugungsverfahren nach einem der Ansprüche 1 bis 3, wobei R>1,

**dadurch gekennzeichnet, dass** der Schritt des Dämpfens der Extrema durch Korrektur von Konstellationssymbolen nacheinander für jeden der R Unterblöcke von N verschachtelten Symbolen durchgeführt wird, und dadurch, dass:

- der Schritt des Dämpfens, der für die Unterblöcke 1 bis v-1 von N verschachtelten Symbolen durchführt wird, wobei v eine Ganzzahl zwischen 2 und R ist, v-1 Unterblöcke von N korrigierten verschachtelten Symbolen liefert;
- wenn der Schritt des Dämpfens für einen v-ten Unterblock von N verschachtelten Symbolen durchgeführt wird, der Spitzenvektor, der von der Korrektur berücksichtigt wird, in Abhängigkeit von einer Amplitude mindestens eines Zeitabtastwerts aus v-1 Unterblöcken von N korrigierten verschachtelten Zeitabtastwerten aktualisiert wird, die der diskreten Fourier-Transformierten der v-1 Unterblöcke von N korrigierten verschachtelten Symbolen entsprechen, die zuvor erhalten wurden.

**5.** Erzeugungsverfahren nach Anspruch 4,
**dadurch gekennzeichnet, dass**, wenn der Schritt des Dämpfens für den v-ten Unterblock von N verschachtelten Symbolen durchgeführt wird, das Aktualisieren des Spitzenvektors, der von der Korrektur berücksichtigt wird, für ein Element mit Index s des Spitzenvektors, wobei s eine Ganzzahl zwischen 0 und N-1 ist, Folgendem entspricht:

• einem Inkrementieren des Elements mit Index s um einen Wert, der einer Differenz entspricht, der um einen ersten Korrekturfaktor Gup gewichtet ist, zwischen einer Amplitude eines Abtastwerts mit Index s eines Unterblocks von N korrigierten verschachtelten Zeitabtastwerten, der der diskreten Fourier-Transformierten des Unterblocks des Rangs v-1 von N korrigierten verschachtelten Symbolen entspricht, der zuvor erhalten wurde, und einer Amplitude eines Abtastwerts mit Index s eines Unterblocks von N verschachtelten Zeitabtastwerten, der der diskreten Fourier-Transformierten des Unterblocks des Rangs v-1 von N verschachtelten Symbolen entspricht, wenn die Differenz positiv oder null ist;
• einem Dekrementieren des Elements mit Index s um einen Wert, der der Differenz entspricht, der um einen zweiten Korrekturfaktor Gdown gewichtet ist, wenn die Differenz negativ ist;

**6.** Erzeugungsverfahren nach Anspruch 5, wobei der Wert des ersten Korrekturfaktors Gup 1 beträgt und der Wert des zweiten Korrekturfaktors Gdown 0,707 beträgt.

**7.** Erzeugungsverfahren nach einem der Ansprüche 1 bis 6, **dadurch gekennzeichnet, dass** am Ende des Schritts des Erhaltens eines Blocks von M Zeitabtastwerten durch die diskrete Fourier-Transformierte des Blocks von M Quellsymbolen, ein Schritt des Überabtastens des erhaltenen Blocks von M Zeitabtastwerten durchgeführt wird.

**8.** Erzeugungsverfahren nach einem der Ansprüche 1 bis 7, wobei das Dämpfen der Extrema durch Korrektur der Konstellationssymbole eine Korrektur durchführt, die zu der Gruppe gehört, die Folgendes umfasst:

• eine ACE-Korrektur (für "Active Constellation Extension" auf Englisch);
• eine TI-CES-Korrektur (für "Tone Injection - Constellation Extension Scheme" auf Englisch);
• eine CD-Korrektur (für "Constellation Distortion" auf Englisch);
• eine TR-Korrektur (für "Tone Reservation" auf Englisch); und
• eine PCTS-Korrektur (für "Pre-Constructed Temporal Signal" auf Englisch).

**9.** Erzeugungsverfahren nach einem der Ansprüche 1 bis 8, **dadurch gekennzeichnet, dass** es ferner einen vorausgehenden Schritt des Vorkorrigierens des Blocks von M Quellsymbolen umfasst, wobei ein Quellsymbol um einen vorgegebenen Zwischenkorrekturwert zwischen einem Korrekturwert von null und einem extremen Korrekturwert vorkorrigiert wird.

**10.** Verfahren zur Dämpfung von Extrema eines OFDM-Mehrträgersignals, umfassend einen Schritt des Dämpfens (103), durch Korrektur von Konstellationssymbolen, der Extrema eines Blocks von N Zeitabtastwerten, der einer diskreten Fourier-Transformierten eines Blocks von N Konstellationssymbolen entspricht, wobei die Korrektur einen Spitzenvektor berücksichtigt, der für die Extrema des Mehrträgersignals repräsentativ ist und einen Block von N korrigierten Symbolen liefert,

**dadurch gekennzeichnet, dass**, das OFDM-Mehrträgersignal umfassend OFDM-Blöcke (200), die von M Trägern gebildet sind, die von Konstellationssymbolen, den Quellsymbolen, moduliert werden, wobei ein Block von M Quellsymbolen einem OFDM-Block von M Trägern entspricht:

• der Block von N Konstellationssymbolen ein Unterblock (201) aus R Unterblöcken von N verschachtelten Symbolen ist, die durch Verschachteln (100) von M Symbolen eines Quellsymbolblocks erhalten werden, wobei R, M und N Ganzzahlen sind, wie beispielsweise M = R x N;
• der Spitzenvektor durch Bestimmen (102) von N Maximalamplituden aus den Zeitabtastwerten erhalten wird, die durch die diskrete Fourier-Transformierte (101) des Blocks von M Quellsymbolen erhalten werden;

und dadurch, dass es einen Schritt des Entschachtelns (104) von R Unterblöcken von N korrigierten verschachtelten Symbolen, die durch Wiederholung des Schritts des Dämpfens erhalten werden, für jeden Block von N Konstellationssymbolen aus den R Unterblöcken von N verschachtelten Symbolen umfasst.

11. Computerprogrammprodukt, umfassend Programmcode-Anweisungen für die Umsetzung eines Verfahrens nach einem der Ansprüche 1 bis 9, wenn das Programm von einem Prozessor ausgeführt wird.

12. Computerprogrammprodukt, umfassend Programmcode-Anweisungen für die Umsetzung eines Verfahrens nach Anspruch 10, wenn es von einem Prozessor ausgeführt wird.

13. Vorrichtung zur Erzeugung (310) eines OFDM-Mehrträgersignals, das OFDM-Blöcke (200) umfasst, die von M Trägern gebildet sind, die von Konstellationssymbolen, den Quellsymbolen, moduliert werden, wobei ein Block von M Quellsymbolen einem OFDM-Block von M Trägern entspricht, **dadurch gekennzeichnet, dass** es einerseits Folgendes umfasst:

• eine Einrichtung zur Verschachtelung (300) von M Symbolen eines Quellsymbolblocks zu R Unterblöcken (201) von N verschachtelten Symbolen, wobei R, M und N natürliche Zahlen sind, wie zum Beispiel M = R x N;

Und andererseits:

• eine erste Einrichtung zur Erzeugung (301) eines Blocks von M Zeitabtastwerten durch die diskrete Fourier-Transformierte des Blocks von M Quellsymbolen;
• eine Einrichtung zur Berechnung (302) von N Maximalamplituden aus den Abtastwerten des Blocks von M Zeitabtastwerten und eine zweite Einrichtung zur Erzeugung (302) eines Spitzenvektors, der die N Maximalamplituden enthält;

und dadurch, dass es ebenfalls Folgendes umfasst:

• eine Einrichtung zur Dämpfung (303, 303', 303"), durch Korrektur von Konstellationssymbolen, von Extrema eines Unterblocks von N Zeitabtastwerten, der der diskreten Fourier-Transformierten eines Unterblocks von N verschachtelten Symbolen entspricht, wobei die Korrektur wenigstens den Spitzenvektor berücksichtigt und einen Unterblock von N korrigierten verschachtelten Symbolen liefert,
• eine Einrichtung zur Entschachtelung (304) von R Unterblöcken von N korrigierten verschachtelten Symbolen, die einen Block von M korrigierten Quellsymbolen liefert; und
• eine dritte Einrichtung zur Erzeugung (305) eines OFDM-Blocks des Mehrträgersignals durch die diskrete Fourier-Transformierte des Blocks von M korrigierten Quellsymbolen.

14. Vorrichtung zur Dämpfung von Extrema (410, 410') eines OFDM-Mehrträgersignals, umfassend eine Einrichtung zur Dämpfung (303, 303', 303"), durch Korrektur von Konstellationssymbolen, der Extrema eines Blocks von N Zeitabtastwerten, der einer diskreten Fourier-Transformierten eines Blocks von N Konstellationssymbolen entspricht, wobei die Korrektur einen Spitzenvektor berücksichtigt, der für die Extrema des Mehrträgersignals repräsentativ ist und einen Block von N korrigierten Symbolen liefert,

**dadurch gekennzeichnet, dass**, das OFDM-Mehrträgersignal umfassend OFDM-Blöcke (200), die von M Trägern gebildet sind, die von Konstellationssymbolen, den Quellsymbolen, moduliert werden, wobei ein Block von M Quellsymbolen einem OFDM-Block von M Trägern entspricht, die Vorrichtung Folgendes umfasst:

• eine Einrichtung zur Verschachtelung (300) von M Symbolen eines Quellsymbolblocks zu R Unterblöcken (201) von N verschachtelten Symbolen, wobei R, M und N natürliche Zahlen sind, wie zum Beispiel M = R x N, wobei der Block von N Konstellationssymbolen ein Unterblock aus den R Unterblöcken von N verschachtelten Symbolen ist;
• eine Einrichtung zur Berechnung (302) von N Maximalamplituden aus den Zeitabtastwerten, die durch
die diskrete Fourier-Transformierte des Blocks von M Zeitabtastwerten erhalten werden, und eine Einrichtung zur Erzeugung (302) eines Spitzenvektors, der die N Maximalamplituden enthält;

und dadurch, dass es ebenfalls Folgendes umfasst:

• eine Einrichtung zur Entschachtelung (304) von R Unterblöcken von N korrigierten verschachtelten Symbolen, die einen Block von M korrigierten Quellsymbolen liefert.

**Claims**

1. Method for generating an OFDM multicarrier signal comprising OFDM blocks (200) consisting of M carriers modulated
by constellation symbols, called source symbols, a block of M source symbols corresponding to an OFDM block of
M carriers,

   **characterized in that** it comprises, on the one hand:

   • a step of interleaving (100) the M symbols of a block of source symbols into R sub-blocks (201) of N
   interleaved symbols, where R, M and N are natural integers such that M=RxN;

   and, on the other hand, steps of:

   • obtaining (101) a block of M temporal samples through a discrete Fourier transform on said block of M
   source symbols;
   • determining (102) N maximum amplitudes out of said samples of said block of M temporal samples and
   forming (102) a vector containing said N maximum amplitudes, called peak vector;

   **and in that** it also comprises steps of:

   • attenuating (103), by correcting constellation symbols, extrema of a sub-block of N temporal samples
   corresponding to the discrete Fourier transform on one of said R sub-blocks of N interleaved symbols, said
   correction taking into account at least said peak vector and delivering a sub-block of N corrected interleaved
   symbols,

   said attenuation step, which is repeated for each sub-block out of said R sub-blocks of N interleaved symbols,
   delivering R sub-blocks of N corrected interleaved symbols;

   • deinterleaving (104) said R sub-blocks of N corrected interleaved symbols, delivering a block of M corrected
   source symbols; and
   • generating (105) an OFDM block of said multicarrier signal through a discrete Fourier transform on said
   block of M corrected source symbols.

2. Generation method according to Claim 1, **characterized in that,** in said step of interleaving the M symbols of a
block of source symbols into R sub-blocks of N interleaved symbols, an ith sub-block of N interleaved symbols, i
being an integer ranging from 1 to R, comprises symbols of index (i-1)+k*R of said block of source symbols, k being
an integer ranging from 0 to N-1.

3. Generation method according to either one of Claims 1 and 2,
**characterized in that** an element of index j of said peak vector, j being an integer ranging from 0 to N-1, is equal
to said maximum amplitude of the samples of index j+r*N of said block of M temporal samples, with r being an
integer ranging from 0 to R-1.

4. Generation method according to any one of Claims 1 to 3, in which R>1,

   **characterized in that** said step of attenuating the extrema by correcting constellation symbols is performed successively for each of said R sub-blocks of N interleaved symbols,
**and in that:**

- said attenuation step performed for said sub-blocks 1 to v-1 of N interleaved symbols, where v is an integer between 2 and R, delivers v-1 sub-blocks of N corrected interleaved symbols;
- when said attenuation step is performed for a vth sub-block of N interleaved symbols, said peak vector taken into account by said correction is updated on the basis of an amplitude of at least one temporal sample out of v-1 sub-blocks of N corrected interleaved temporal samples corresponding to the discrete Fourier transform on said v-1 previously obtained sub-blocks of N corrected interleaved symbols.

5. Generation method according to Claim 4,
**characterized in that,** when said attenuation step is performed for said vth sub-block of N interleaved symbols, said update of said peak vector taken into account by said correction corresponds, for an element of index s of said peak vector, s being an integer between 0 and N-1, to:

• an incrementation of said element of index s by a value corresponding to a difference, weighted by a first corrective factor Gup, between an amplitude of a sample of index s of a sub-block of N corrected interleaved temporal samples corresponding to the discrete Fourier transform on said previously obtained sub-block of rank v-1 of N corrected interleaved symbols, and an amplitude of a sample of index s of a sub-block of N interleaved temporal samples corresponding to the discrete Fourier transform on said sub-block of rank v-1 of N interleaved symbols when said difference is positive or zero;
• a decrementation of said element of index s by a value corresponding to said difference, weighted by a second corrective factor Gdown, when said difference is negative.

6. Generation method according to Claim 5, wherein said first corrective factor Gup has the value 1 and said second corrective factor Gdown has the value 0.707.

7. Generation method according to any one of Claims 1 to 6,
**characterized in that,** at the end of said step of obtaining a block of M temporal samples through a discrete Fourier transform on said block of M source symbols, it implements a step of oversampling said obtained block of M temporal samples.

8. Generation method according to any one of Claims 1 to 7, wherein said attenuation of the extrema by correcting the constellation symbols implements a correction belonging to the group comprising:

• an ACE (for "Active Constellation Extension") correction;
• a TI-CES (for "Tone Injection - Constellation Extension Scheme") correction;
• a CD (for "Constellation Distortion") correction;
• a TR (for "Tone Reservation") correction; and
• a PCTS (for "Pre-Constructed Temporal Signal") correction.

9. Generation method according to any one of Claims 1 to 8,
**characterized in that** it furthermore comprises a preliminary step of pre-correcting said block of M source symbols, a source symbol being pre-corrected by a predefined intermediate correction value between a zero correction value and an extreme correction value.

10. Method for attenuating extrema of an OFDM multicarrier signal, comprising a step of attenuating (103), by correcting constellation symbols, the extrema of a block of N temporal samples corresponding to a discrete Fourier transform on a block of N constellation symbols, said correction taking into account a peak vector representative of the extrema of said multicarrier signal and delivering a block of N corrected symbols,

**characterized in that,** with said OFDM multicarrier signal comprising OFDM blocks (200) consisting of M carriers modulated by constellation symbols, called source symbols, a block of M source symbols corresponding to an OFDM block of M carriers:

• said block of N constellation symbols is a sub-block (201) out of R sub-blocks of N interleaved symbols obtained by interleaving (100) M symbols of a block of source symbols, where R, M and N are natural integers such that M=RxN;

• said peak vector is obtained by determining (102) N maximum amplitudes out of the temporal samples obtained through a discrete Fourier transform (101) on said block of M source symbols;

**and in that** it comprises a step of deinterleaving (104) R sub-blocks of N corrected interleaved symbols, obtained by repeating said attenuation step, for each block of N constellation symbols out of said R sub-blocks of N interleaved symbols.

11. Computer program product, comprising program code instructions for implementing a method according to any one of Claims 1 to 9 when said program is executed by a processor.

12. Computer program product, comprising program code instructions for implementing a method according to Claim 10 when it is executed by a processor.

13. Device (310) for generating an OFDM multicarrier signal comprising OFDM blocks (200) consisting of M carriers modulated by constellation symbols, called source symbols, a block of M source symbols corresponding to an OFDM block of M carriers,

**characterized in that** it comprises, on the one hand:

• an interleaver (300) for interleaving M symbols of a block of source symbols into R sub-blocks (201) of N interleaved symbols, where R, M and N are natural integers such that M=RxN;

and, on the other hand:

• a first generator (301) for generating a block of M temporal samples through a discrete Fourier transform on said block of M source symbols;
• a computer (302) for computing N maximum amplitudes out of said samples of said block of M temporal samples and a second generator (302) for generating a vector containing said N maximum amplitudes, called peak vector;

**and in that** it also comprises:

• an attenuator (303, 303', 303") for attenuating, by correcting constellation symbols, extrema of a sub-block of N temporal samples corresponding to the discrete Fourier transform on a sub-block of N interleaved symbols, said correction taking into account at least said peak vector and delivering a block of N corrected interleaved symbols,
• a deinterleaver (304) for deinterleaving R sub-blocks of N corrected interleaved symbols, delivering a block of M corrected source symbols; and
• a third generator (305) for generating an OFDM block of said multicarrier signal through a discrete Fourier transform on said block of M corrected source symbols.

14. Device (410, 410') for attenuating extrema of an OFDM multicarrier signal, comprising an attenuator (303, 303', 303") for attenuating, by correcting constellation symbols, extrema of a block of N temporal samples corresponding to a discrete Fourier transform on a block of N constellation symbols, said correction taking into account a peak vector representative of the extrema of said multicarrier signal and delivering a block of N corrected symbols,

**characterized in that,** with said OFDM multicarrier signal comprising OFDM blocks (200) consisting of M carriers modulated by constellation symbols, called source symbols, a block of M source symbols corresponding to an OFDM block of M carriers, said device comprises:

• an interleaver (300) for interleaving M symbols of a block of source symbols into R sub-blocks (201) of N interleaved symbols, where R, M and N are natural integers such that M=RxN, said block of N constellation symbols being a sub-block out of said R sub-blocks of N interleaved symbols;
• a computer (302) for computing N maximum amplitudes out of the temporal samples obtained through a discrete Fourier transform on said block of M source symbols and a generator (302) for generating a vector containing said N maximum amplitudes, called peak vector;

**and in that** it also comprises:

• a deinterleaver (304) for deinterleaving R sub-blocks of N corrected interleaved symbols, delivering a block of M corrected source symbols.

**Figure 1**

**Figure 2**

Figure 3

**Figure 4**

**Figure 5a**

**Figure 5b**

**Figure 6**

**Figure 7a**

**Figure 7b**

310

802

**Figure 8a**

μP

Pg    RAM

801    803

410

812

**Figure 8b**

μP

Pg    RAM

811    813

410'

822

**Figure 8c**

μP

Pg    RAM

821    823

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3003107

**Littérature non-brevet citée dans la description**

- **S. H. HAN ; J. M. CIOFFI.** Tone Injection with Hexagonal Constellation for Peak-to-Average Power Ratio Reduction in OFDM. *IEEE Communications Letters,* Septembre 2006, vol. 10 (9
- **B. S. KRONGOLD ; D. L. JONES.** PAR Reduction in OFDM via active Constellation Extension. *IEEE Trans. On Broadcasting,* Septembre 2003, vol. 49 (3
- **A. AGGARWAL ; E. R. STAUFFER ; T. H. MENG.** Computing the Optimal Amount of Constellation Distortion in OFDM Systems ''. *ICC 2007 Proceedings,* 2007
- **M. MROUÉ ; A. NAFKHA ; J. PALICOT ; B. GAVALDA ; N. DAGORNE.** Performance and implementation Evaluation of TR PAPR Reduction Methods for DVB-T2. *International Journal of Digital Multimedia Broadcasting,* 2010
- A Novel Subblock Partition Scheme for Partial Transmit Sequence OFDM. **SEOG GEUN KANG et al.** IEEE TRANSACTIONS ON BROADCASTING. IEEE SERVICE CENTER, 01 Septembre 1999, vol. 45, 333-338
- Digital Video Broadcasting (DVB) ; Frame structure channel coding and modulation for a second generation digital terrestrial television broadcasting system (DVB-T2). *ETSI EN 302 755 V1.3.1,* Avril 2012